# EUROPEAN PATENT APPLICATION

(11) **EP 4 821 623 A1**
(43) Date of publication of application: **14.10.2026**
(21) Application number: 24900373.2
(22) Date of filing: 08.11.2024
(51) Int. Cl.: B23D 61/02, B23D 47/00, B27B 33/08

(54) **CIRCULAR SAW BLADE**

(30) Priority: 08.12.2023 JP 2023207854
(71) Applicant: Kanefusa Kabushiki Kaisha, Ohguchi-cho, Niwa-gun Aichi 480-0192 (JP)
(72) Inventor: MASU Yuta, Niwa-gun, Aichi 480-0192 (JP)
(74) Representative: Maikowski & Ninnemann Patentanwälte Partnerschaft mbB
(86) International application number: PCT/JP2024/039783
(87) International publication number: WO 2025/121078

(57) **Abstract**

A circular saw blade (1) has a disk-shaped base metal (2). The circular saw blade (1) has a plurality of gullets (10) recessed in an outer periphery (2b) of the base metal (2). The circular saw blade (1) has a plurality of tips (5) joined to the outer periphery (2b) of the base metal (2). The plurality of gullets (10) includes deep gullets (11) having a gullet depth (11a) of 1.13 to 1.60 times the average gullet depth. The plurality of gullets (10) includes shallow gullets (12) having a gullet depth (12a) of 0.60 to 0.95 times the average gullet depth. The circular saw blade (1) includes a deep region (14) containing only 2 to 3 consecutive deep gullets (11) and a shallow region (15) containing only 2 to 7 consecutive shallow gullets (12).

## Description

### [TECHNICAL FIELD]

The present disclosure relates to a circular saw blade used for cutting, for example, wood, wood-based materials, synthetic resin materials, steel materials, non-ferrous metals, and the like.

### [BACKGROUND ART]

Conventionally, circular saw blades have been provided in which a plurality of tips is joined along the outer periphery of a disk-shaped base metal. Circular saw blades are used for cutting operations on, for example, wood, wood-based materials, resin materials, non-ferrous metals such as aluminum, and the like. When the circular saw blade is rotated, the cutting edge of each tip sequentially cuts the workpiece to form a groove, thereby cutting the workpiece. The outer periphery of the base metal is provided with tooth bodies that protrude radially outward and to which tips are joined. Gullets are provided between the tooth bodies in the circumferential direction.

Cutting vibration occurs when a workpiece is cut with a circular saw blade. Since cutting vibration affects the finished surface of the workpiece, it is desirable to be able to reduce cutting vibration. Various structures for reducing cutting vibration have been proposed conventionally. JP6472875B describes a structure for reducing cutting vibration by providing, in the circumferential direction, deep gullets having a large gullet depth among a plurality of gullets arranged in the circumferential direction.

However, with conventionally proposed structures, it has been difficult to reduce cutting vibration occurring over a wide rotational speed range from low rotational speeds to high rotational speeds. For example, under conditions of high cutting resistance, the amplitude of high-frequency cutting vibration increases. The increased high-frequency cutting vibration forms a fine scale pattern on the cut surface, degrading the quality of the finished surface. This high frequency is influenced by the gullet shape of the circular saw blade and occurs at a predetermined rotational speed within the rotational speed range from low to high rotational speeds. Through intensive research by the inventors, it was found that it is difficult to reduce cutting vibration over a wide rotational speed range with conventional structures. Therefore, there was room for improvement in reducing high-frequency cutting vibration over a wide rotational speed range.

### [SUMMARY OF THE INVENTION]

### [PROBLEM TO BE SOLVED BY THE INVENTION]

Therefore, there has conventionally been a need to provide a circular saw blade capable of reducing cutting vibration over a wide rotational speed range.

### [MEANS FOR SOLVING THE PROBLEM]

According to one aspect of the present disclosure, a circular saw blade has a disk-shaped base metal. The circular saw blade has a plurality of gullets recessed in an outer periphery of the base metal. The circular saw blade has a plurality of tips joined to the outer periphery of the base metal. The plurality of gullets includes deep gullets having a gullet depth of 1.13 to 1.60 times the average gullet depth. The plurality of gullets includes shallow gullets having a gullet depth of 0.60 to 0.95 times the average gullet depth. The circular saw blade includes a deep region containing only 2 to 3 consecutive deep gullets and a shallow region containing only 2 to 7 consecutive shallow gullets.

This makes it possible to reduce cutting vibration over a wide rotational speed range. For example, cutting vibration caused by vibration of each tooth body adjacent in the circumferential direction can also be reduced over a wide rotational speed range. This makes it possible to maintain good quality of cut surface of a workpiece over a wide rotational speed range. The gullet depth is the difference between a radius of the outermost periphery of the cutting edge and a radius of a gullet bottom (a position of the gullet closest to a center of a rotation shaft of the circular saw blade), centered on the rotation shaft of the circular saw blade.

According to another aspect of the present disclosure, a slotted gullet in which a slot is connected to the gullet is adjacent to the deep region. The slotted gullet is adjacent to 2 to 3 consecutive deep gullets in the deep region. By having a slot, the slotted gullet is closer in nature to the deep gullet than to the shallow gullet. Therefore, the slotted gullet may contribute to reducing cutting vibration as part of the deep region. Thus, the effect of reducing cutting vibration over a wide rotational speed range may be enhanced.

According to another aspect of the present disclosure, deep regions and shallow regions are alternately arranged. Therefore, no four or more deep gullets are consecutive, and no eight or more shallow gullets are consecutive. When the number of consecutive gullets having substantially the same gullet depth is large, the effect of suppressing cutting vibration is weakened. By controlling the number of consecutive deep gullets or shallow gullets, cutting vibration caused by vibration of each tooth body adjacent in the circumferential direction may be reduced over a wide rotational speed range.

According to another aspect of the present disclosure, a slotted gullet in which a slot is connected to the gullet is provided in place of at least one of the deep gullets. The difference between a radius of an axial-center-side end of the slot and a radius of the outermost periphery of the cutting edge is 1.3 to 2.0 times the average gullet depth. The slotted gullet achieves the same effects as the deep gullet in reducing cutting vibration over a wide rotational speed range. Therefore, even when at least one of the deep gullets is replaced with a slotted gullet, cutting vibration may be reduced over a wide rotational speed range.

### [BRIEF DESCRIPTION OF THE DRAWINGS]

FIG. 1 is a side view of a circular saw blade according to a first embodiment.
FIG. 2 is a partially enlarged top view of the circular saw blade.
FIG. 3 is a front view of tip of the circular saw blade.
FIG. 4 is a partially enlarged side view of the circular saw blade.
FIG. 5 is a side view of a circular saw blade according to a second embodiment.
FIG. 6 is a partially enlarged side view of a circular saw blade according to a third embodiment.
FIG. 7 is a partially enlarged side view of a circular saw blade according to a fourth embodiment.
FIG. 8 is a partially enlarged side view of a circular saw blade according to a fifth embodiment.
FIG. 9 is a partially enlarged side view of a circular saw blade according to a sixth embodiment.
FIG. 10 is a partially enlarged side view of a circular saw blade according to a seventh embodiment.
FIG. 11 is a partially enlarged side view of a circular saw blade according to a eighth embodiment.
FIG. 12 is a partially enlarged side view of a circular saw blade according to a ninth embodiment.
FIG. 13 is a partially enlarged side view of a circular saw blade according to a tenth embodiment.
FIG. 14 is a partially enlarged side view of a circular saw blade according to a first comparative example.
FIG. 15 is a partially enlarged side view of a circular saw blade according to a second comparative example.
FIG. 16 is a partially enlarged side view of a circular saw blade according to a third comparative example.
FIG. 17 is a set of photographs showing cut surfaces made by the circular saw blade of the first embodiment.
FIG. 18 is a set of photographs showing cut surfaces made by the circular saw blade of the third embodiment.
FIG. 19 is a set of photographs showing cut surfaces made by the circular saw blade of the fourth embodiment.
FIG. 20 is a set of photographs showing cut surfaces made by the circular saw blade of the fifth embodiment.
FIG. 21 is a set of photographs showing cut surfaces made by the circular saw blade of the sixth embodiment.
FIG. 22 is a set of photographs showing cut surfaces made by the circular saw blade of the tenth embodiment.
FIG. 23 is a set of photographs showing cut surfaces made by the circular saw blade of the first comparative example.
FIG. 24 is a set of photographs showing cut surfaces made by the circular saw blade of the second comparative example.
FIG. 25 is a set of photographs showing cut surfaces made by the circular saw blade of the third comparative example.
FIG. 26 is a graph showing cut surface rating and Rz made by the circular saw blade of the first embodiment.
FIG. 27 is a graph showing cut surface rating and Rz made by the circular saw blade of the third embodiment.
FIG. 28 is a graph showing cut surface rating and Rz made by the circular saw blade of the fourth embodiment.
FIG. 29 is a graph showing cut surface rating and Rz made by the circular saw blade of the fifth embodiment.
FIG. 30 is a graph showing cut surface rating and Rz made by the circular saw blade of the sixth embodiment.
FIG. 31 is a graph showing cut surface rating and Rz made by the circular saw blade of the first comparative example.
FIG. 32 is a graph showing cut surface rating and Rz made by the circular saw blade of the third comparative example.
FIG. 33 is a graph showing a relationship between ratio of gullet depths of deep gullets and shallow gullets and ratio of displacement amounts of tooth bodies in an axial direction of a base metal.
FIG. 34 is a side view of the circular saw blade according to an eleventh embodiment.
FIG. 35 is a side view of the circular saw blade according to a twelfth embodiment.
FIG. 36 is a side view of the circular saw blade according to a thirteenth embodiment.
FIG. 37 is a side view of the circular saw blade according to a fourth comparative example.
FIG. 38 is a set of photographs showing cut surfaces made by the circular saw blade of the eleventh embodiment.
FIG. 39 is a set of photographs showing cut surfaces made by the circular saw blade of the twelfth embodiment.
FIG. 40 is a set of photographs showing cut surfaces made by the circular saw blade of the thirteenth embodiment.
FIG. 41 is a set of photographs showing cut surfaces made by the circular saw blade of the fourth comparative example.
FIG. 42 is a set of photographs showing cut surfaces made by the circular saw blade of the fifth comparative example.
FIG. 43 is a graph showing cut surface rating and Rz made by the circular saw blade of the eleventh embodiment.
FIG. 44 is a graph showing cut surface rating and Rz made by the circular saw blade of the twelfth embodiment.
FIG. 45 is a graph showing cut surface rating and Rz made by the circular saw blade of the thirteenth embodiment.
FIG. 46 is a graph showing cut surface rating and Rz made by the circular saw blade of the fourth comparative example.
FIG. 47 is a graph showing cut surface rating and Rz made by the circular saw blade of the fifth comparative example.
FIG. 48 is a table showing cut surface rating and Rz made by the circular saw blades of each embodiment and each comparative example.

### [DETAILED DESCRIPTION OF THE PREFERRED EMBODIMENTS]

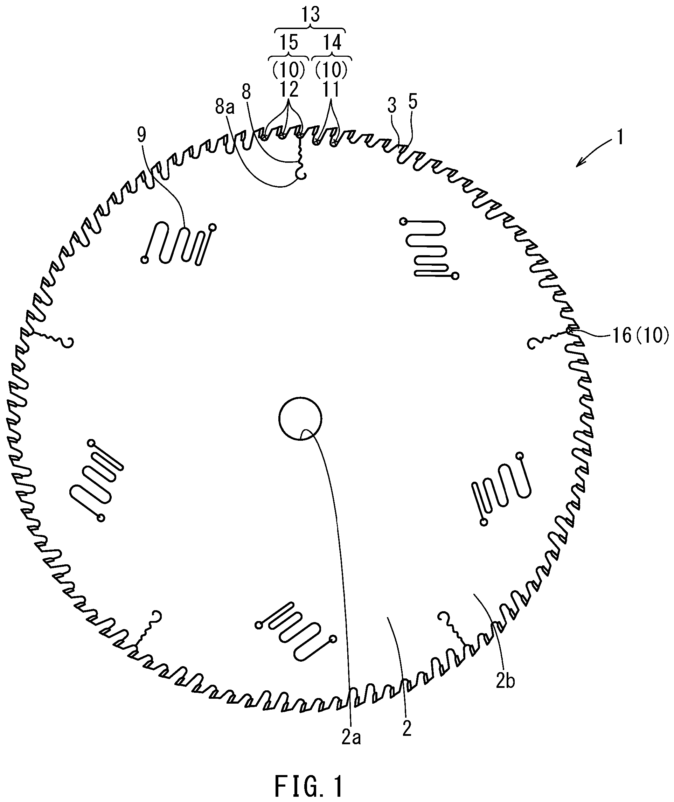

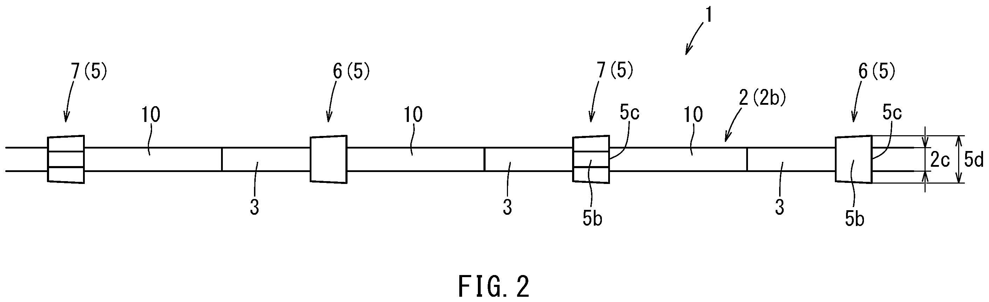

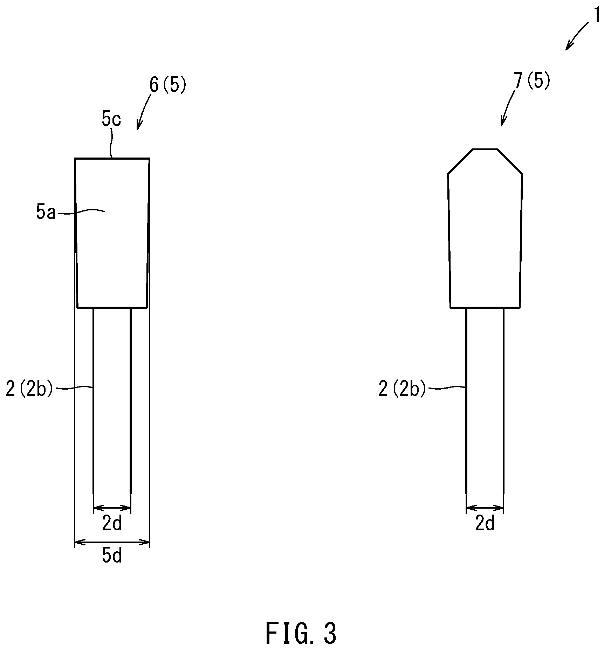

One embodiment of the present disclosure will be described with reference to FIG. 1. Identical reference numerals used in the description refer to identical elements having the same functions, and redundant descriptions thereof are omitted. As shown in FIG. 1, a circular saw blade 1 has a disk-shaped base metal 2 and a plurality of tips 5 joined to an outer periphery 2b of the base metal 2. By rotating the base metal 2, cutting edges 5c of each tip 5 (see FIGS. 2, 3) form a groove in a workpiece to cut the workpiece. The workpiece may be, for example, wood, wood-based materials such as wood boards, synthetic resin materials, ceramic materials, steel materials such as carbon steel, structural rolled steel, chromium-molybdenum steel, stainless steel, and cast iron; and non-ferrous metals such as aluminum, aluminum alloys, copper, and copper alloys.

As shown in FIG. 1, a substantially circular mounting hole 2a penetrating in the thickness direction of the base metal 2 is provided at the center of the base metal 2. A rotation shaft of a circular saw blade cutting machine is inserted into the mounting hole 2a. The circular saw blade 1 rotates in a clockwise direction in the figure to cut the workpiece. The outer diameter of the circular saw blade 1 may be, for example, 200 mm to 800 mm, and may be, for example, 355 mm. The base metal 2 is made of steel, for example, alloy tool steel. A blade thickness of the circular saw blade 1 corresponds to a thickness 5d of the tip 5 (see FIG. 2), and may be, for example, 0.8 mm to 5.0 mm, and may be, for example, 2.0 mm. The disk-shaped base metal 2 has a plurality of tooth bodies 3 protruding radially outward from an outer periphery 2b. The plurality of tooth bodies 3 is formed at regular intervals in a circumferential direction of the base metal 2. The thickness 2c of the base metal 2 is slightly smaller than the thickness 5d of the tip 5. The thickness 2c may be, for example, 0.6 to 4.5 mm, and may be, for example, 1.5 mm (see FIG. 2).

As shown in FIGS. 2 and 3, the tips 5 include a first tip 6 and a second tip 7 having different configurations. The first tip 6 and the second tip 7 are alternately joined at predetermined intervals in the circumferential direction of the base metal 2. The first tip 6 and the second tip 7 alternately reach the workpiece to divide and cut the workpiece.

As shown in FIG. 1, the base metal 2 is provided with a plurality of slots (external slots) 8 extending radially inward from gullets 10. A radially inward end 8a of the slot 8 curves in a substantially C-shape with a diameter larger than a width of the slot 8. This makes it possible to suppress stress concentration at the end 8a of the slot 8 and suppress occurrence of cracks. Inside the base metal 2, an internal slot 9 having a wave-like meandering shape is provided.

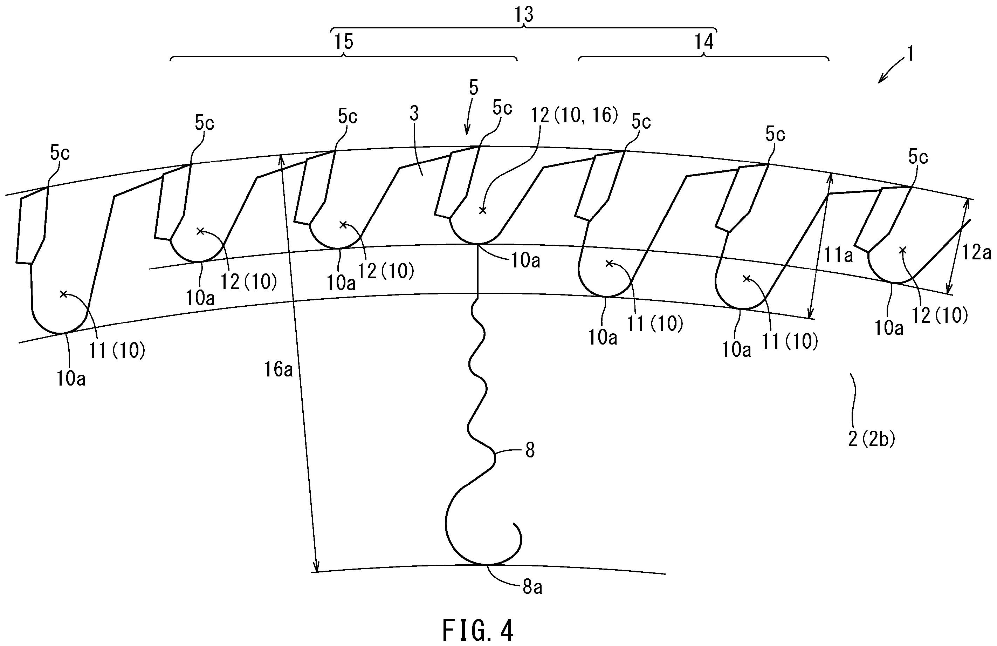

As shown in FIG. 4, the plurality of gullets 10 includes a deep gullet 11 having a gullet depth 11a, which is the difference between the radius of the outermost periphery of the cutting edge 5c and the radius of the gullet bottom 10a (the position of the gullet 10 closest to the center of the rotation shaft of the circular saw blade 1). The plurality of gullets 10 includes a shallow gullet 12 having a gullet depth 12a, which is the difference between the radius of the outermost periphery of the cutting edge 5c and the radius of the gullet bottom 10a. The gullet depth 11a of the deep gullet 11 may be, for example, 1.3 to 2.0 times the gullet depth 12a of the shallow gullet 12, and may be, for example, 1.5 times. For example, the gullet depth 11a of the deep gullet 11 may be 11.34 mm, and the gullet depth 12a of the shallow gullet 12 may be, for example, 7.56 mm. The gullet depth 11a of the deep gullet 11 may be 1.13 to 1.60 times the average gullet depth, and may be, for example, 1.25 times. The gullet depth 12a of the shallow gullet 12 is 0.60 to 0.95 times the average gullet depth, and may be, for example, 0.83 times. In this case, the average gullet depth is the sum of each gullet depth divided by the number of gullets 10.

With reference to FIG. 4, when the gullet depth 11a of the deep gullet 11 is 1.3 times and 2.0 times the gullet depth 12a of the shallow gullet 12, the gullet depth 11a of the deep gullet 11 may be 1.16 times and 1.43 times the average gullet depth, respectively. When the gullet depth 11a of the deep gullet 11 is 1.3 times and 2.0 times the gullet depth 12a of the shallow gullet 12, the gullet depth 12a of the shallow gullet 12 may be 0.89 times and 0.71 times the average gullet depth, respectively.

As shown in FIGS. 1 and 4, the plurality of gullets 10 has a gullet row 13 composed of a combination of deep gullets 11 and shallow gullets 12. The gullet row 13 is repeatedly arranged in the circumferential direction. The gullet row 13 includes a deep region 14 in which two deep gullets 11 are arranged consecutively in the circumferential direction. The gullet row 13 includes a shallow region 15 in which three shallow gullets 12 are arranged consecutively in the circumferential direction. The deep region 14 and the shallow region 15 are alternately arranged in the circumferential direction. The gullet row 13 is provided with a total of five gullets 10 consisting of two deep gullets 11 and three shallow gullets 12. In total, 100 gullets 10 may be provided by repeating 15 to 25 sets, specifically 20 sets, of the gullet row 13.

As shown in FIG. 4, the slot 8 is provided near the gullet bottom 10a of the shallow gullet 12 adjacent to the rear of the deep region 14 in the rotational direction. In the present disclosure, this shallow gullet 12 is a slotted gullet 16 in which the slot 8 is provided. The circular saw blade has five slotted gullets 16. Each slotted gullet 16 is provided at a position equally divided into five equal parts in the circumferential direction. The slotted gullet 16 has a tip depth 16a including the slot 8. The tip depth 16a is the difference between the radius of the outermost periphery of the cutting edge 5c and the radius of the axial-center-side end 8a of the slot 8. The tip depth 16a may be, for example, 5 mm to 50 mm, and may be, for example, 25 mm.

With reference to FIG. 4, when the gullet depth 11a of the deep gullet 11 is 1.3 times the gullet depth 12a of the shallow gullet 12, the tip depth 16a of the slotted gullet 16, when regarded as a gullet depth, is 1.3 to 8.0 times, 2 to 3 times, for example 2.68 times, the average gullet depth including slots. Note that the average gullet depth including slots is larger than the aforementioned average gullet depth because it takes the slot depth into account.

As described above, the circular saw blade 1, as shown in FIGS. 1 and 4, has a disk-shaped base metal 2. The circular saw blade 1 has a plurality of gullets 10 recessed in the outer periphery 2b of the base metal 2. The circular saw blade 1 has a plurality of tips 5 joined to the outer periphery 2b of the base metal 2. The plurality of gullets 10 includes deep gullets 11 having a gullet depth 11a of 1.13 to 1.60 times the average gullet depth. The plurality of gullets 10 includes shallow gullets 12 having a gullet depth 12a of 0.60 to 0.95 times the average gullet depth. The circular saw blade 1 includes a deep region 14 containing only 2 to 3 consecutive deep gullets 11 and a shallow region 15 containing only 2 to 7 consecutive shallow gullets 12.

This makes it possible to reduce cutting vibration over a wide rotational speed range. For example, cutting vibration caused by vibration of each tooth body 3 adjacent in the circumferential direction can also be reduced over a wide rotational speed range. This makes it possible to maintain good quality of the cut surface of the workpiece over a wide rotational speed range.

As shown in FIGS. 1 and 4, the slotted gullet 16, in which the slot 8 is connected to the gullet 10, is adjacent to the deep region 14. The slotted gullet 16 is further consecutive with the two consecutive deep gullets 11 of the deep region 14. Therefore, the effect of reducing cutting vibration over a wide rotational speed range may be enhanced.

As shown in FIGS. 1 and 4, the deep region 14 and the shallow region 15 are alternately arranged. Therefore, no four or more deep gullets 11 are consecutive. No eight or more shallow gullets 12 are consecutive. When the number of consecutive gullets 10 having substantially the same gullet depth 11a or gullet depth 12a is large, the effect of suppressing cutting vibration becomes weaker. By controlling the number of consecutive deep gullets 11 or shallow gullets 12, cutting vibration caused by vibration of each tooth body adjacent in the circumferential direction may be reduced over a wide rotational speed range.

As shown in FIG. 4, in the gullet 10 adjacent to the deep region 14, the slot 8 is connected to the gullet 10, and the tip depth 16a is greater than 1.3 times and no more than 8.0 times the average gullet depth. Therefore, the tip depth 16a including the slot 8 is sufficiently longer than the average gullet depth. Moreover, the gullet 10 including the slot 8 achieves the same effects as the deep gullet 11 against cutting vibration, and by being consecutive in the deep region 14, the effect of reducing cutting vibration over a wide rotational speed range may be further enhanced.

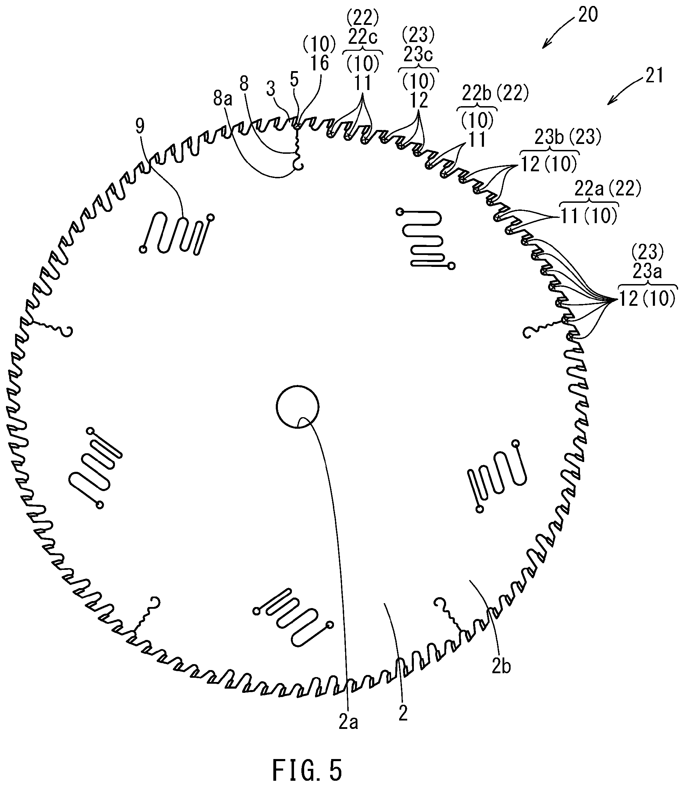

Next, the second embodiment of the present disclosure will be described with reference to FIG. 5. The circular saw blade 20 of the second embodiment has a gullet row 21 in place of the gullet row 13 shown in FIG. 1. In the following description, only the parts that differ from the first embodiment will be described in detail.

As shown in FIG. 5, the gullet row 21 includes a deep region 22 in which deep gullets 11 are consecutively provided and a shallow region 23 in which shallow gullets 12 are consecutively provided. The gullet row 21 is provided with alternating shallow regions 23 and deep regions 22, in order from the front in the rotational direction: first shallow region 23a, first deep region 22a, second shallow region 23b, second deep region 22b, third shallow region 23c, and third deep region 22c. The first shallow region 23a is provided with seven consecutive shallow gullets 12. The first deep region 22a is provided with two consecutive deep gullets 11. The second shallow region 23b is provided with three consecutive shallow gullets 12. The second deep region 22b is provided with two consecutive deep gullets 11. The third shallow region 23c is provided with three consecutive shallow gullets 12. The third deep region 22c is provided with three consecutive deep gullets 11. The gullet row 21 is provided with a total of 20 gullets 10. 100 gullets 10 are provided by repeating 2 to 8 sets, specifically 5 sets, of the gullet row 21.

As shown in FIG. 5, in the circular saw blade 20, the gullet depth 11a of the deep gullet 11 (see FIG. 4) is 1.13 to 1.60 times the average gullet depth, and may be, for example, 1.28 times. The gullet depth 12a of the shallow gullet 12 (see FIG. 4) is 0.60 to 0.95 times the average gullet depth, and may be, for example, 0.85 times. One shallow gullet 12 of the gullet row 21 is a slotted gullet 16 in which the slot 8 is provided near the gullet bottom. The circular saw blade 20 has five slotted gullets 16. The tip depth 16a of the slotted gullet 16 (see FIG. 4), when regarded as a gullet depth, is greater than 1.3 times and no more than 8.0 times the average gullet depth including slots, and may be, for example, 2.56 times.

With reference to FIG. 5, in the circular saw blade 20, when the gullet depth 11a of the deep gullet 11 (see FIG. 4) is 1.3 times and 2.0 times the gullet depth 12a of the shallow gullet 12 (see FIG. 4), the gullet depth 11a of the deep gullet 11 may be 1.18 times and 1.48 times the average gullet depth, respectively, and the gullet depth 12a of the shallow gullet 12 may be 0.90 times and 0.74 times the average gullet depth, respectively. Also, the tip depth 16a of the slotted gullet 16 (see FIG. 4), when regarded as a gullet depth, is 2 to 3 times the average gullet depth including slots, and may be, for example, 2.71 times and 2.26 times. The circular saw blade 20 described above achieves the same effects as the circular saw blade 1 shown in FIG. 1.

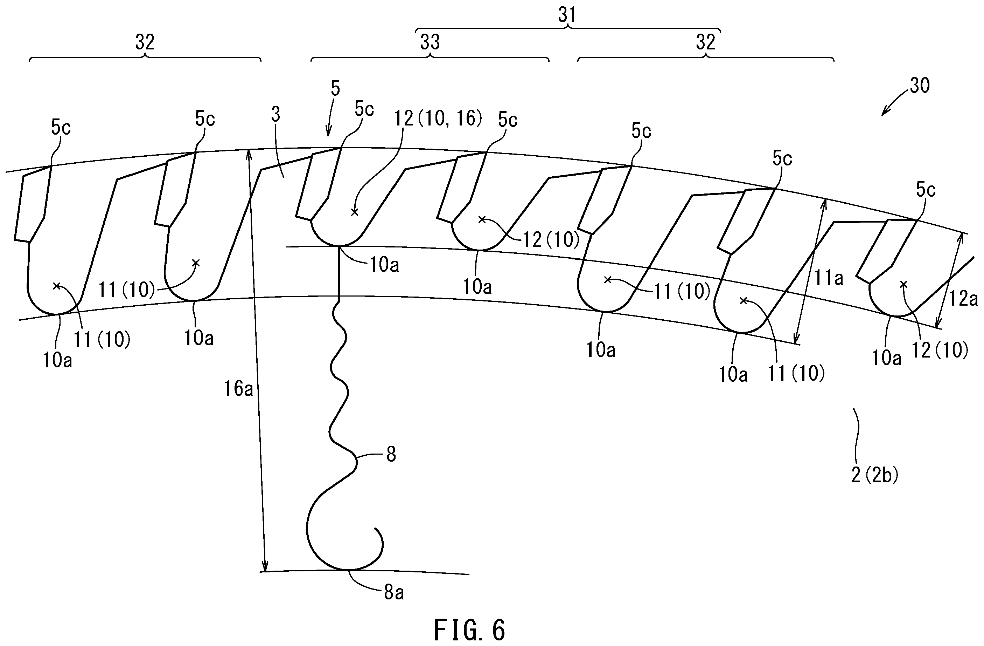

Next, the third embodiment of the present disclosure will be described with reference to FIG. 6. The circular saw blade 30 of the third embodiment has a gullet row 31 in place of the gullet row 13 shown in FIG. 1. In the following description, only the parts that differ from the first embodiment will be described in detail.

As shown in FIG. 6, in the gullet row 31, a deep region 32 and a shallow region 33 are alternately arranged in the circumferential direction. The deep region 32 is provided with two consecutive deep gullets 11. The shallow region 33 is provided with two consecutive shallow gullets 12. The gullet row 31 is provided with a total of four gullets 10. In total, 100 gullets 10 are provided by repeating 20 to 30 sets, specifically 25 sets, of the gullet row 31. The circular saw blade 30 has five shallow gullets 12 as slotted gullets 16. The slotted gullet 16 is adjacent to the front of the deep region 32 in the rotational direction.

As shown in FIG. 6, in the circular saw blade 30, the gullet depth 11a of the deep gullet 11 is 1.13 to 1.60 times the average gullet depth, and may be, for example, 1.20 times. The gullet depth 12a of the shallow gullet 12 is 0.60 to 0.95 times the average gullet depth, and may be, for example, 0.80 times. The tip depth 16a of the slotted gullet 16, when regarded as a gullet depth, is greater than 1.3 times and no more than 8.0 times the average gullet depth including slots, and may be, for example, 2.42 times.

With reference to FIG. 6, in the circular saw blade 30, when the gullet depth 11a of the deep gullet 11 is 1.3 times and 2.0 times the gullet depth 12a of the shallow gullet 12, the gullet depth 11a of the deep gullet 11 may be 1.13 times and 1.33 times the average gullet depth, respectively, and the gullet depth 12a of the shallow gullet 12 may be 0.87 times and 0.67 times the average gullet depth, respectively. Also, the tip depth 16a of the slotted gullet 16, when regarded as a gullet depth, is 2 to 3 times the average gullet depth including slots, and may be, for example, 2.61 times and 2.05 times. The circular saw blade 30 described above achieves the same effects as the circular saw blade 1 shown in FIG. 1.

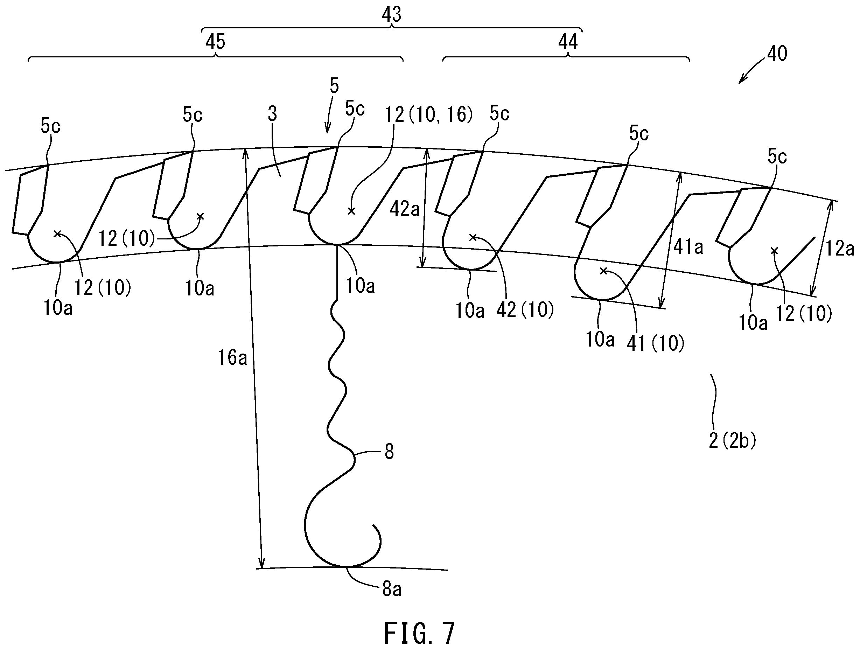

Next, the fourth embodiment of the present disclosure will be described with reference to FIG. 7. The circular saw blade 40 of the fourth embodiment has a gullet row 43 in place of the gullet row 13 shown in FIG. 1. In the following description, only the parts that differ from the first embodiment will be described in detail.

As shown in FIG. 7, in the gullet row 43, a deep region 44 and a shallow region 45 are alternately arranged in the circumferential direction. In the deep region 44, a first deep gullet 41 at the front in the rotational direction and a second deep gullet 42 at the rear in the rotational direction are consecutively provided in the circumferential direction. The shallow region 45 is provided with three consecutive shallow gullets 12. The gullet row 43 is provided with a total of five gullets 10. 100 gullets 10 are provided by repeating 20 sets of the gullet row 43. The circular saw blade 40 has five shallow gullets 12 as slotted gullets 16. The slotted gullet 16 is adjacent to the rear of the deep region 44 in the rotational direction. The gullet depth 41a of the first deep gullet 41 is 1.5 times the gullet depth 12a of the shallow gullet 12. The gullet depth 42a of the second deep gullet 42 is 1.3 times the gullet depth 12a of the shallow gullet 12.

As shown in FIG. 7, in the circular saw blade 40, the gullet depth 41a of the first deep gullet 41 is 1.13 to 1.60 times the average gullet depth, and may be, for example, 1.29 times. The gullet depth 42a of the second deep gullet 42 is 1.13 to 1.60 times the average gullet depth, and may be, for example, 1.20 times. The gullet depth 12a of the shallow gullet 12 is 0.60 to 0.95 times the average gullet depth, and may be, for example, 0.86 times. The tip depth 16a of the slotted gullet 16, when regarded as a gullet depth, is greater than 1.3 times and no more than 8.0 times the average gullet depth including slots, and may be, for example, 2.59 times. The circular saw blade 40 described above achieves the same effects as the circular saw blade 1 shown in FIG. 1.

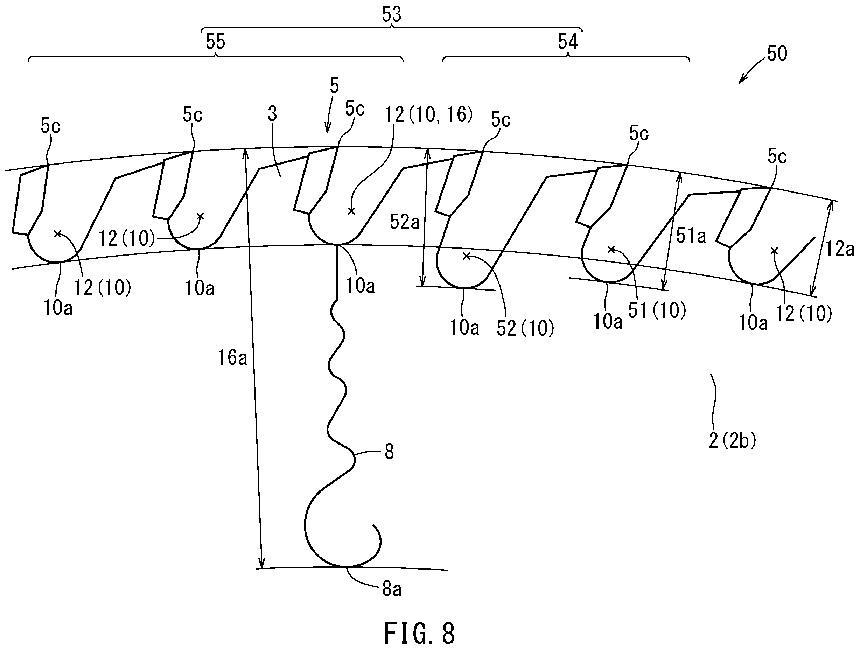

Next, the fifth embodiment of the present disclosure will be described with reference to FIG. 8. The circular saw blade 50 of the fifth embodiment has a gullet row 53 in place of the gullet row 43 shown in FIG. 7. In the following description, only the parts that differ from the seventh embodiment will be described in detail.

As shown in FIG. 8, in the gullet row 53, a deep region 54 and a shallow region 55 are alternately arranged in the circumferential direction. In the deep region 54, a first deep gullet 51 at the front in the rotational direction and a second deep gullet 52 at the rear in the rotational direction are consecutively provided in the circumferential direction. The gullet depth 51a of the first deep gullet 51 and the gullet depth 52a of the second deep gullet 52 are 1.3 times and 1.5 times the gullet depth 12a of the shallow gullet 12, respectively. The shallow region 55 is provided with three consecutive shallow gullets 12. The gullet row 53 is provided with a total of five gullets 10. 100 gullets 10 are provided by repeating 20 sets of the gullet row 53. The circular saw blade 50 has five shallow gullets 12, which are adjacent to the rear of the deep region 54 in the rotational direction, as slotted gullets 16. The circular saw blade 50 described above achieves the same effects as the circular saw blade 40 shown in FIG. 7.

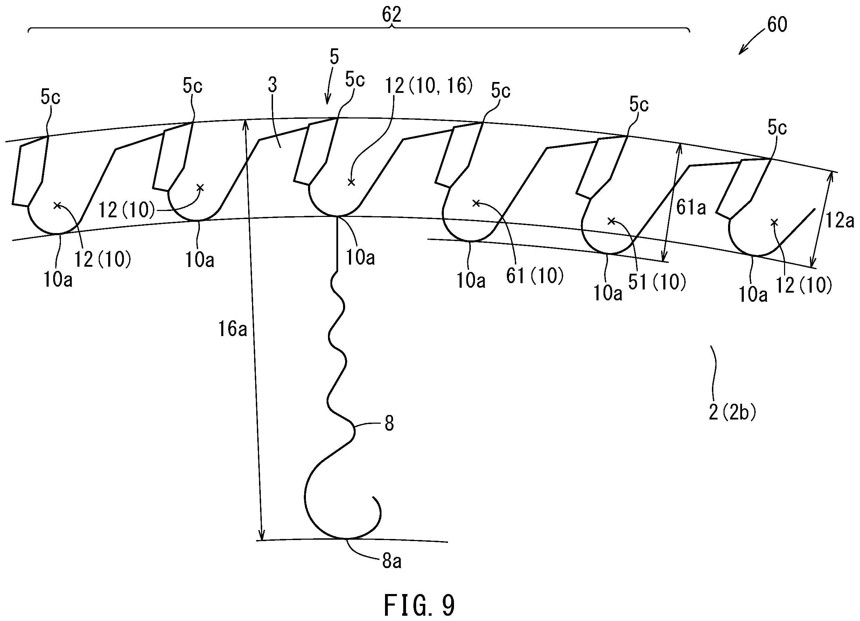

Next, the sixth embodiment of the present disclosure will be described with reference to FIG. 9. The circular saw blade 60 of the sixth embodiment has a gullet row 62 in place of the gullet row 13 shown in FIG. 1. In the following description, only the parts that differ from the first embodiment will be described in detail.

As shown in FIG. 9, the gullet depth 61a of the deep gullet 61 is 1.3 times the gullet depth 12a of the shallow gullet 12. In the circular saw blade 60, the gullet depth 61a of the deep gullet 61 is 1.13 to 1.60 times the average gullet depth, and may be, for example, 1.16 times. The gullet depth 12a of the shallow gullet 12 is 0.60 to 0.95 times the average gullet depth, and may be, for example, 0.89 times. The tip depth 16a of the slotted gullet 16, when regarded as a gullet depth, is greater than 1.3 times and no more than 8.0 times the average gullet depth including slots, and may be, for example, 2.68 times. The circular saw blade 60 described above achieves the same effects as the circular saw blade 1 shown in FIG. 1.

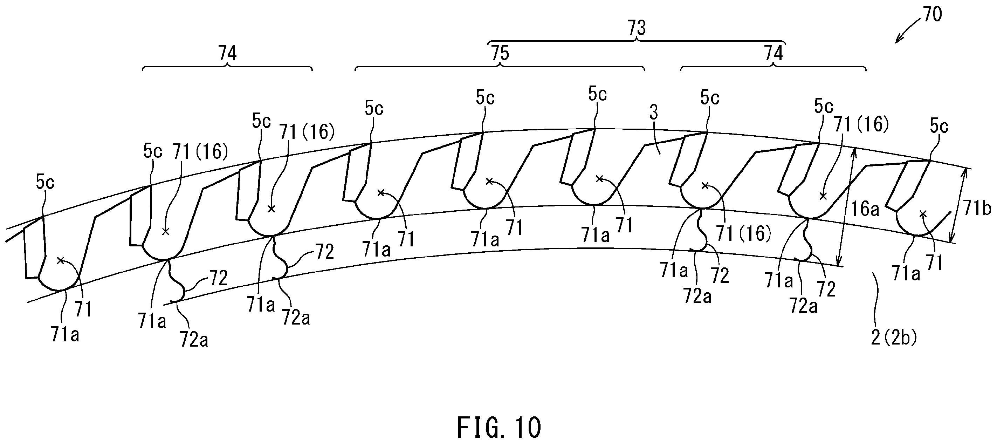

Next, the seventh embodiment of the present disclosure will be described with reference to FIG. 10. The circular saw blade 70 of the seventh embodiment has a gullet row 73 in place of the gullet row 13 shown in FIG. 1. In the following description, only the parts that differ from the first embodiment will be described in detail. In the circular saw blade 70, instead of the plurality of deep gullets 11 shown in FIG. 4, slotted gullets 16 in which short slots 72 are connected near the gullet bottom 71a are provided.

As shown in FIG. 10, the circular saw blade 70 has 100 gullets 71. The gullets 71 are provided with a gullet depth 71b that is the difference between the radius of the outermost periphery of the cutting edge 5c and the radius of the gullet bottom 71a. In the gullet row 73, a deep region 74 and a shallow region 75 are alternately arranged in the circumferential direction. The deep region 74 is provided with two consecutive slotted gullets 16. The shallow region 75 is provided with three consecutive gullets 71. The gullet row 73 is provided with a total of five gullets 71. In total, 100 gullets 71 are provided by repeating 20 sets of the gullet row 73.

As shown in FIG. 10, the slot 72 extends radially inward from the gullet 71. The radially inward end 72a of the slot 72 curves in a substantially C-shape with a diameter larger than the width of the slot 72. The tip depth 16a of the slotted gullet 16 is the difference between the radius of the outermost periphery of the cutting edge 5c and the radius of the radially inward end 72a of the slot 72. The tip depth 16a is 1.3 to 2.0 times the gullet depth 71b of the gullet 71, and may be, for example, 1.5 times. In the circular saw blade 70, the tip depth 16a of the slotted gullet 16, when regarded as a gullet depth, is 1.13 to 1.60 times the average gullet depth including slots, and may be, for example, 1.25 times. The gullet depth 71b of the gullet 71, when the tip depth 16a is regarded as a gullet depth, is 0.60 to 0.95 times the average gullet depth including slots, and may be, for example, 0.83 times.

The circular saw blade 70 described above achieves the same effects as the circular saw blade 1 shown in FIG. 1. Moreover, as shown in FIG. 10, in place of at least one of the deep gullets, a slotted gullet 16 in which the slot 72 is connected to the gullet 71 is provided. The tip depth 16a of the slotted gullet 16, that is, the difference between the radius of the axial-center-side end 72a of the slot 72 and the radius of the outermost periphery of the cutting edge 5c, is 1.3 to 2.0 times the average gullet depth. The slotted gullet 16 achieves the same effects as the deep gullet in reducing cutting vibration over a wide rotational speed range. Therefore, even when at least one of the deep gullets is replaced with a slotted gullet 16, cutting vibration may be reduced over a wide rotational speed range.

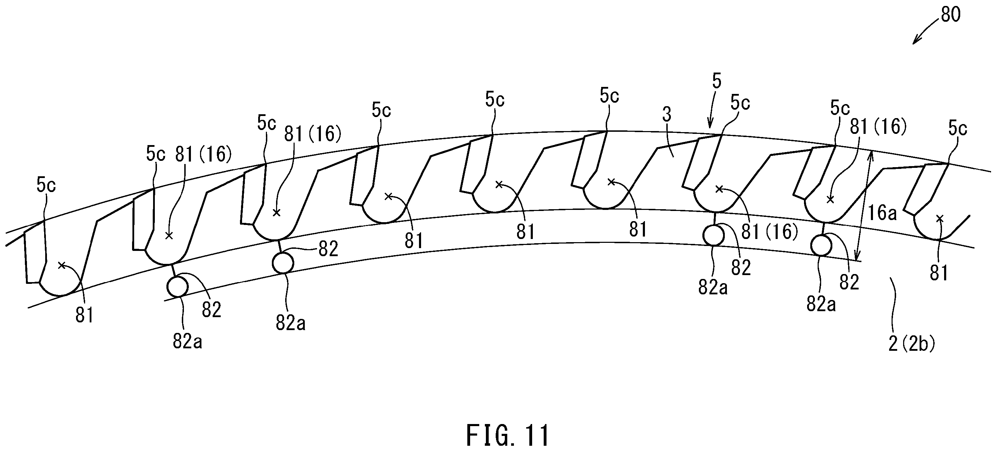

Next, the eighth embodiment of the present disclosure is shown in FIG. 11. The circular saw blade 80 of the eighth embodiment replaces the slot 72 shown in FIG. 10 with a slot 82. The slot 82 extends radially inward from the gullet 81. The radially inward end 82a of the slot 82 is provided as a circular hole having a diameter larger than the width of the slot 82. The circular saw blade 80 described above achieves the same effects as the circular saw blade 1 shown in FIG. 1 and the circular saw blade 70 shown in FIG. 10.

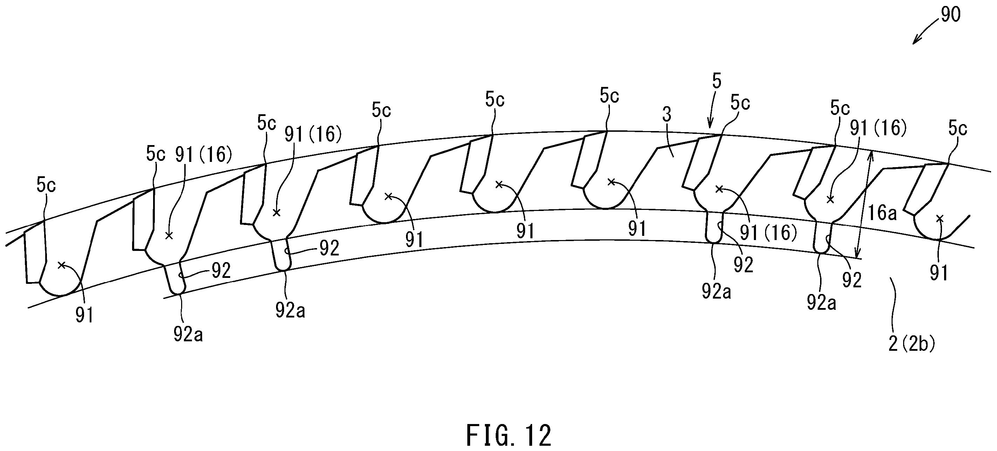

Next, the ninth embodiment of the present disclosure is shown in FIG. 12. The circular saw blade 90 of the ninth embodiment replaces the slot 72 shown in FIG. 10 with a slot 92. The slot 92 extends radially inward from the gullet 91. The width of the slot 92 is narrower than the circumferential width of the gullet 91 (the width passing through the outermost peripheral point of the base metal in the region mainly accommodating chips), and may be, for example, 1/3 to 1/20 of the circumferential width of the gullet 91, and may be, for example, 1.5 mm. The radially inward end 92a of the slot 92 is provided in a semicircular shape having substantially the same diameter as the width of the slot 92. The circular saw blade 90 described above achieves the same effects as the circular saw blade 1 shown in FIG. 1 and the circular saw blade 70 shown in FIG. 10.

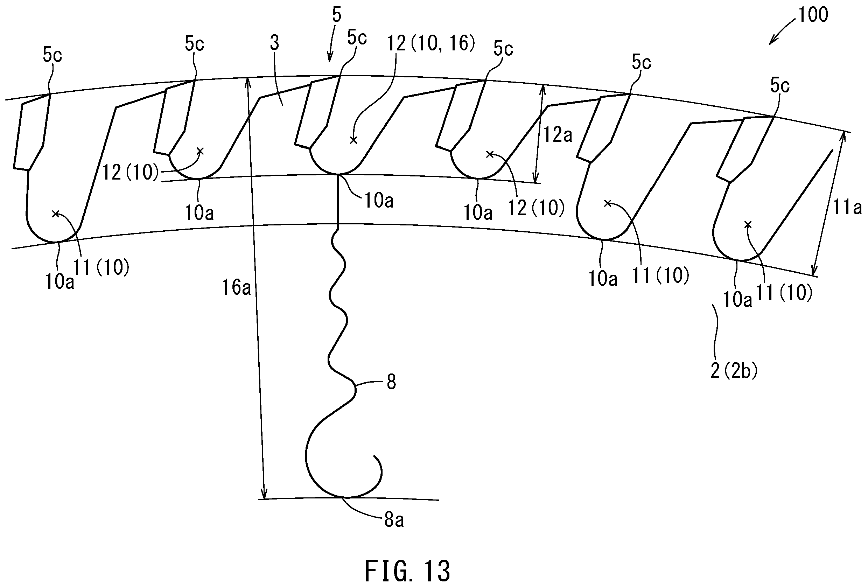

Next, the tenth embodiment of the present disclosure is shown in FIG. 13. The circular saw blade 100 of the tenth embodiment is configured such that the slot 8 shown in FIG. 1 is disposed in the shallow gullet 12, which is not adjacent to the deep gullet 11. The circular saw blade 100 described above achieves the same effects as the circular saw blade 1 shown in FIG. 1.

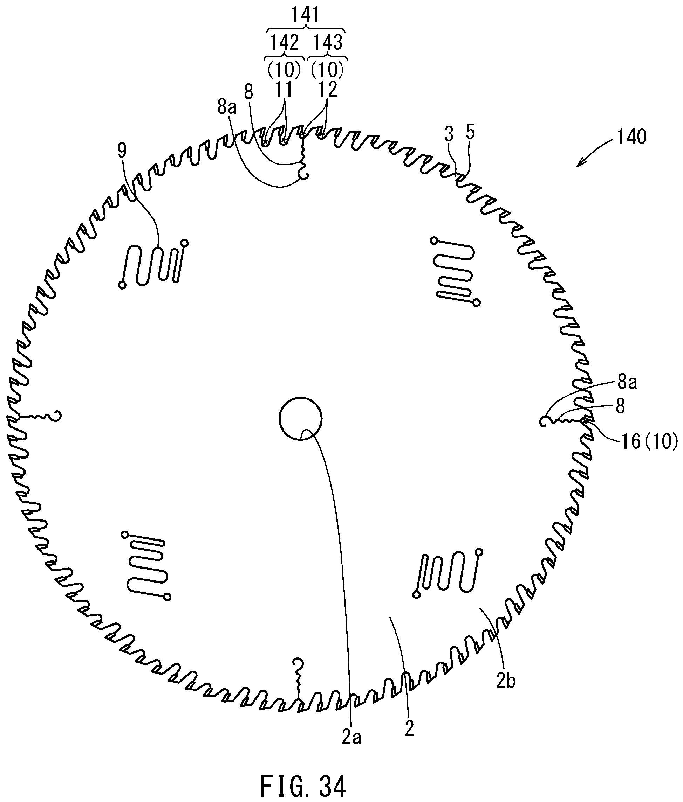

Next, the eleventh embodiment of the present disclosure will be described with reference to FIG. 34. The circular saw blade 140 of the eleventh embodiment has a gullet row 141 in place of the gullet row 13 shown in FIG. 1. In the following description, only the parts that differ from the first embodiment will be described in detail.

As shown in FIG. 34, in the gullet row 141, a deep region 142 and a shallow region 143 are alternately arranged in the circumferential direction. The deep region 142 is provided with two consecutive deep gullets 11. The shallow region 143 is provided with two consecutive shallow gullets 12. The gullet row 141 is provided with a total of four gullets 10. 96 gullets 10 are provided by repeating 20 to 30 sets, specifically 24 sets, of the gullet row 141. The circular saw blade 140 has four shallow gullets 12 as slotted gullets 16. Each slotted gullet 16 is provided at a position equally dividing the outer periphery 2b of the base metal 2 into 4 equal parts in the circumferential direction. The slotted gullet 16 is adjacent to the front of the deep region 142 in the rotational direction.

As shown in FIG. 34, in the circular saw blade 140, the gullet depth 11a of the deep gullet 11 (see FIG. 4) is 1.13 to 1.60 times the average gullet depth, and may be, for example, 1.20 times. The gullet depth 12a of the shallow gullet 12 (see FIG. 4) in the circular saw blade 140 is 0.60 to 0.95 times the average gullet depth, and may be, for example, 0.80 times. The tip depth 16a of the slotted gullet 16 (see FIG. 4) in the circular saw blade 140, when regarded as a gullet depth, is greater than 1.3 times and no more than 8.0 times the average gullet depth including slots, and may be, for example, 2.46 times.

With reference to FIG. 34, in the circular saw blade 140, when the gullet depth 11a of the deep gullet 11 (see FIG. 4) is 1.3 times and 2.0 times the gullet depth 12a of the shallow gullet 12 (see FIG. 4), the gullet depth 11a of the deep gullet 11 may be 1.13 times and 1.33 times the average gullet depth, respectively, and the gullet depth 12a of the shallow gullet 12 may be 0.87 times and 0.67 times the average gullet depth, respectively. Also, the tip depth 16a of the slotted gullet 16 (see FIG. 4), when regarded as a gullet depth, is 2 to 3 times the average gullet depth including slots, and may be, for example, 2.65 times and 2.07 times. The circular saw blade 140 described above achieves the same effects as the circular saw blade 1 shown in FIG. 1.

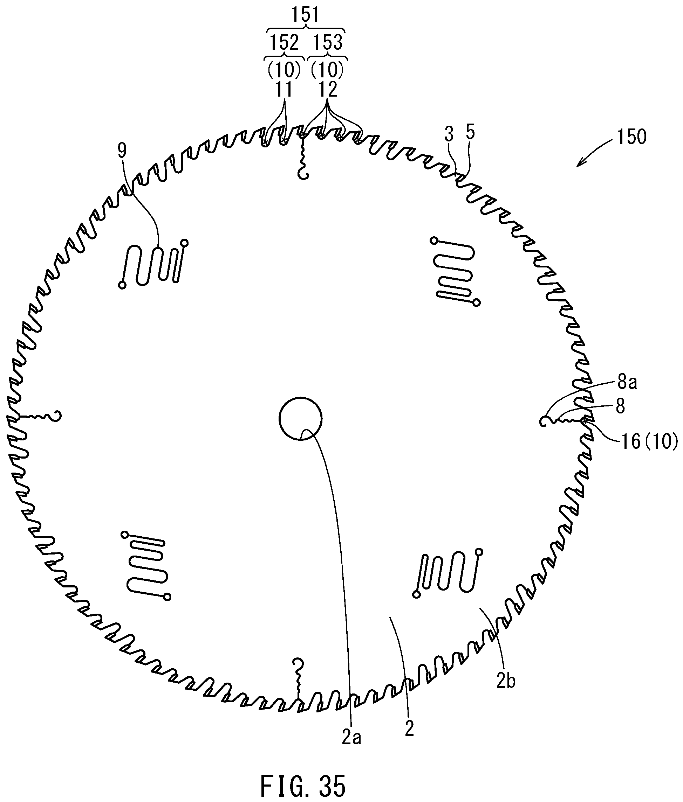

Next, the twelfth embodiment of the present disclosure will be described with reference to FIG. 35. The circular saw blade 150 of the twelfth embodiment has a gullet row 151 in place of the gullet row 13 shown in FIG. 1. In the following description, only the parts that differ from the first embodiment will be described in detail.

As shown in FIG. 35, in the gullet row 151, a deep region 152 and a shallow region 153 are alternately arranged in the circumferential direction. The deep region 152 is provided with two consecutive deep gullets 11. The shallow region 153 is provided with four consecutive shallow gullets 12. The gullet row 151 is provided with a total of six gullets 10. In total, 96 gullets 10 are provided by repeating 10 to 20 sets, specifically 16 sets, of the gullet row 151. The circular saw blade 150 has four shallow gullets 12 as slotted gullets 16. The slotted gullet 16 is adjacent to the front of the deep region 152 in the rotational direction.

As shown in FIG. 35, in the circular saw blade 150, the gullet depth 11a of the deep gullet 11 (see FIG. 4) is 1.13 to 1.60 times the average gullet depth, and may be, for example, 1.29 times. The gullet depth 12a of the shallow gullet 12 (see FIG. 4) in the circular saw blade 150 is 0.60 to 0.95 times the average gullet depth, and may be, for example, 0.86 times. The tip depth 16a of the slotted gullet 16 (see FIG. 4) in the circular saw blade 150, when regarded as a gullet depth, is greater than 1.3 times and no more than 8.0 times the average gullet depth including slots, and may be, for example, 2.62 times.

With reference to FIG. 35, in the circular saw blade 150, when the gullet depth 11a of the deep gullet 11 (see FIG. 4) is 1.3 times and 2.0 times the gullet depth 12a of the shallow gullet 12 (see FIG. 4), the gullet depth 11a of the deep gullet 11 may be 1.18 times and 1.50 times the average gullet depth, respectively, and the gullet depth 12a of the shallow gullet 12 may be 0.91 times and 0.75 times the average gullet depth, respectively. Also, the tip depth 16a of the slotted gullet 16 (see FIG. 4), when regarded as a gullet depth, is 2 to 3 times the average gullet depth including slots, and may be, for example, 2.76 times and 2.31 times. The circular saw blade 150 described above achieves the same effects as the circular saw blade 1 shown in FIG. 1.

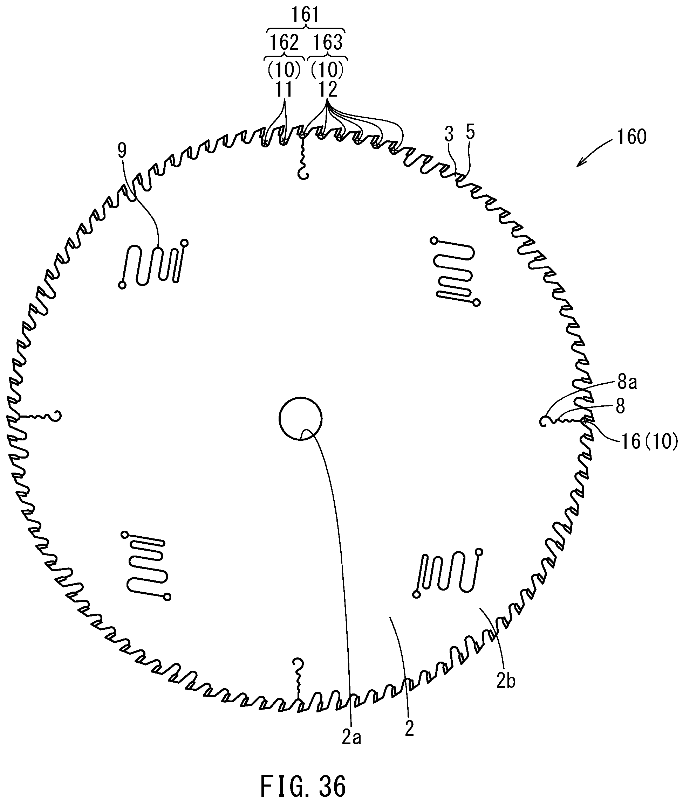

Next, the thirteenth embodiment of the present disclosure will be described with reference to FIG. 36. The circular saw blade 160 of the thirteenth embodiment has a gullet row 161 in place of the gullet row 13 shown in FIG. 1. In the following description, only the parts that differ from the first embodiment will be described in detail.

As shown in FIG. 36, in the gullet row 161, a deep region 162 and a shallow region 163 are alternately arranged in the circumferential direction. The deep region 162 is provided with two consecutive deep gullets 11. The shallow region 163 is provided with six consecutive shallow gullets 12. The gullet row 161 is provided with a total of eight gullets 10. 96 gullets 10 are provided by repeating 5 to 15 sets, specifically 12 sets, of the gullet row 161. The circular saw blade 160 has four shallow gullets 12 as slotted gullets 16. The slotted gullet 16 is adjacent to the front of the deep region 162 in the rotational direction.

As shown in FIG. 36, in the circular saw blade 160, the gullet depth 11a of the deep gullet 11 (see FIG. 4) is 1.13 to 1.60 times the average gullet depth, and may be, for example, 1.33 times. The gullet depth 12a of the shallow gullet 12 (see FIG. 4) in the circular saw blade 160 may be, for example, 0.60 to 0.95 times the average gullet depth, and may be, for example, 0.89 times. The tip depth 16a of the slotted gullet 16 (see FIG. 4) in the circular saw blade 160, when regarded as a gullet depth, is greater than 1.3 times and no more than 8.0 times the average gullet depth including slots, and may be, for example, 2.71 times.

With reference to FIG. 36, in the circular saw blade 160, when the gullet depth 11a of the deep gullet 11 (see FIG. 4) is 1.3 times and 2.0 times the gullet depth 12a of the shallow gullet 12 (see FIG. 4), the gullet depth 11a of the deep gullet 11 may be 1.21 times and 1.60 times the average gullet depth, respectively, and the gullet depth 12a of the shallow gullet 12 may be 0.93 times and 0.80 times the average gullet depth, respectively. Also, the tip depth 16a of the slotted gullet 16 (see FIG. 4), when regarded as a gullet depth, is 2 to 3 times the average gullet depth including slots, and may be, for example, 2.82 times and 2.46 times. The circular saw blade 160 described above achieves the same effects as the circular saw blade 1 shown in FIG. 1.

Tests were conducted to evaluate the cut surface of the workpiece and to measure the surface roughness (maximum height) Rz for the circular saw blades of each embodiment of the present disclosure. For the cutting conditions, an aluminum thick-wall material was used as the workpiece. The rotational speed was varied and measured from 2220 rpm to 4560 rpm in increments of 180 rpm. The feed per tooth Fz was set to 0.01 mm/tooth. The cut surface was graded on a three-level scale of Good (∘), Fair (△), and Poor (×) by visual inspection of the presence or absence of scale patterns and the like, and from the surface roughness Rz. The tests were also conducted for the first through fifth comparative examples in addition to each embodiment. In the following, only the parts that differ from the first embodiment will be described for each comparative example.

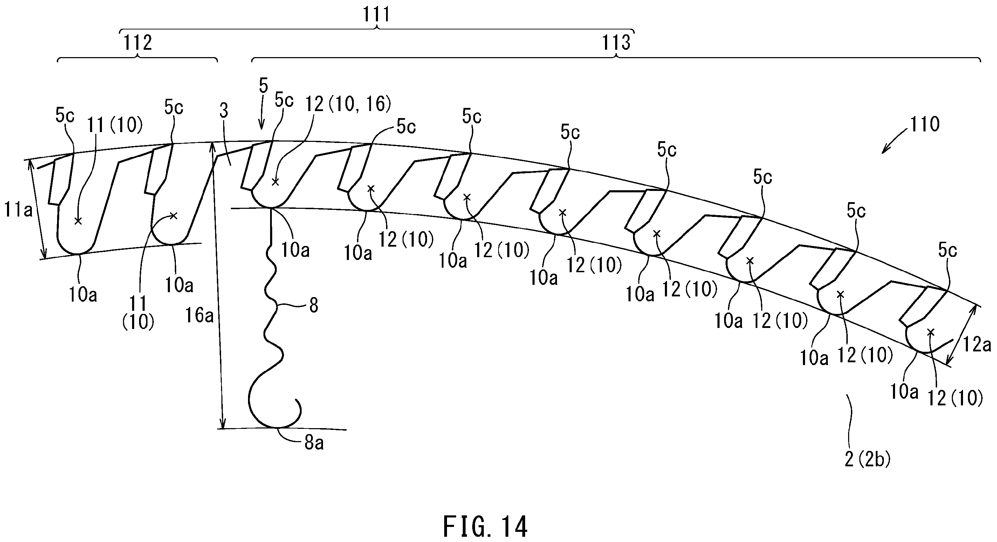

As shown in FIG. 14, the circular saw blade 110 of the first comparative example has a gullet row 111. In the gullet row 111, a deep region 112 and a shallow region 113 are alternately arranged in the circumferential direction. The deep region 112 is provided with 2 consecutive deep gullets 11. The shallow region 113 is provided with 8 consecutive shallow gullets 12. 10 sets of the gullet row 111 are repeated in the circumferential direction. The circular saw blade 110 has 5 shallow gullets 12 as slotted gullets 16. The slotted gullet 16 is adjacent to the front of the deep region 112 in the rotational direction.

With reference to FIG. 14, in the circular saw blade 110, when the gullet depth 11a of the deep gullet 11 is 1.3 times, 1.5 times, and 2.0 times the gullet depth 12a of the shallow gullet 12, the gullet depth 11a of the deep gullet 11 may be 1.23 times, 1.37 times, and 1.67 times the average gullet depth, respectively, and the gullet depth 12a of the shallow gullet 12 may be 0.94 times, 0.91 times, and 0.82 times the average gullet depth, respectively. Also, the tip depth 16a of the slotted gullet 16, when regarded as a gullet depth, may be 2.81 times, 2.72 times, and 2.51 times the average gullet depth including slots, respectively.

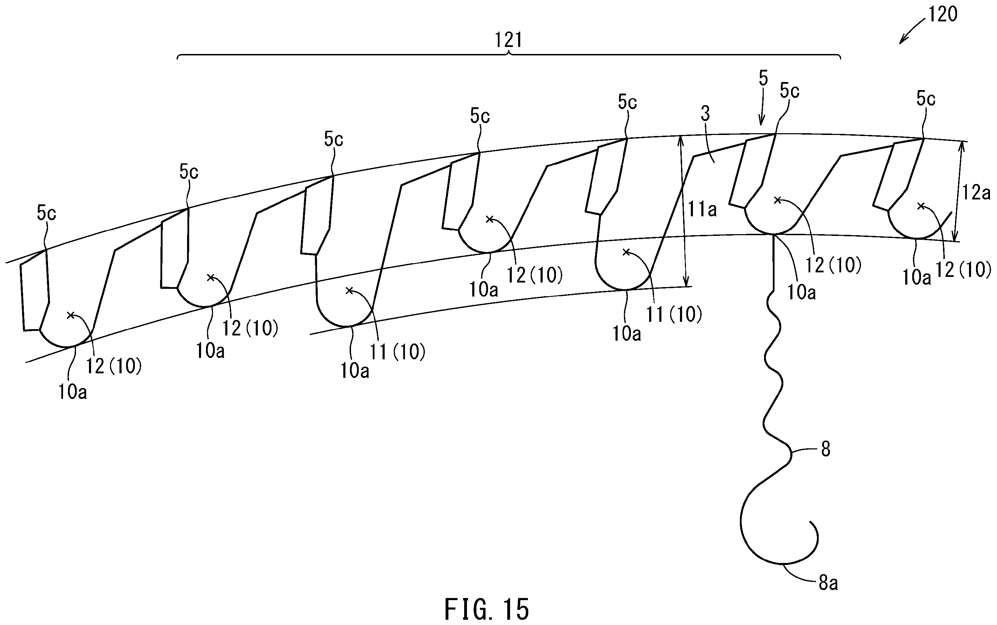

As shown in FIG. 15, the circular saw blade 120 of the second comparative example has a gullet row 121. In the gullet row 121, a shallow gullet 12, a deep gullet 11, a shallow gullet 12, a deep gullet 11, and a shallow gullet 12 are arranged in order from the front in the rotational direction. The gullet row 121 consists of a total of 5 gullets 10. 20 sets of the gullet row 121 are repeated in the circumferential direction. The circular saw blade 120 has 5 shallow gullets 12 as slotted gullets 16. The ratios of the gullet depth 11a of the deep gullet 11, the gullet depth 12a of the shallow gullet 12, and the tip depth 16a of the slotted gullet 16 when regarded as a gullet depth to the average gullet depth are the same as those of the circular saw blade 1 shown in FIG. 4.

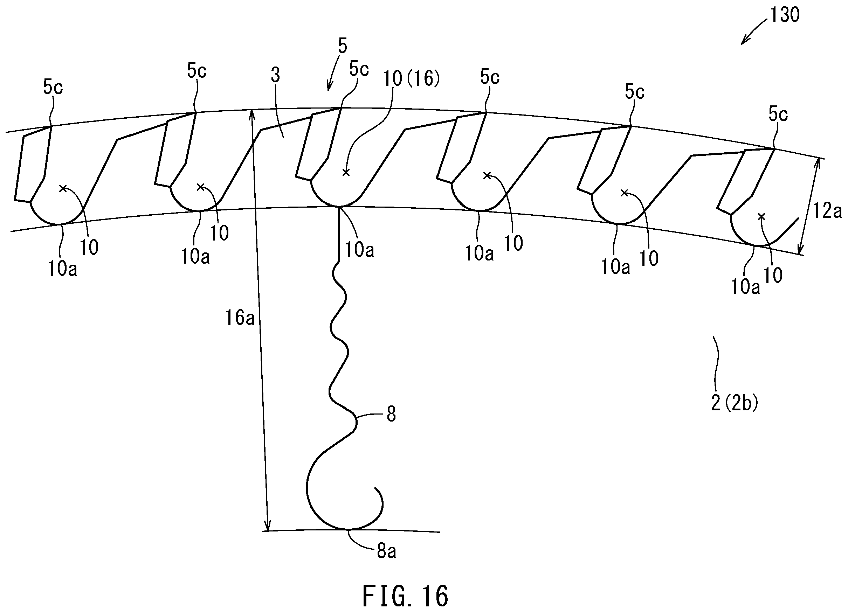

As shown in FIG. 16, the circular saw blade 130 of the third comparative example is provided with 100 gullets 10 all having the same gullet depth arranged in a row. The depth of the gullets 10 is the same as the gullet depth 12a of the shallow gullet 12 (see FIG. 4). When the tip depth 16a of the slotted gullet 16 is regarded as a gullet depth, the gullet depth of the gullets 10 other than the slotted gullet 16 is 0.90 times the average gullet depth including slots. The tip depth 16a of the slotted gullet 16, when regarded as a gullet depth, is 2.96 times the average gullet depth including slots.

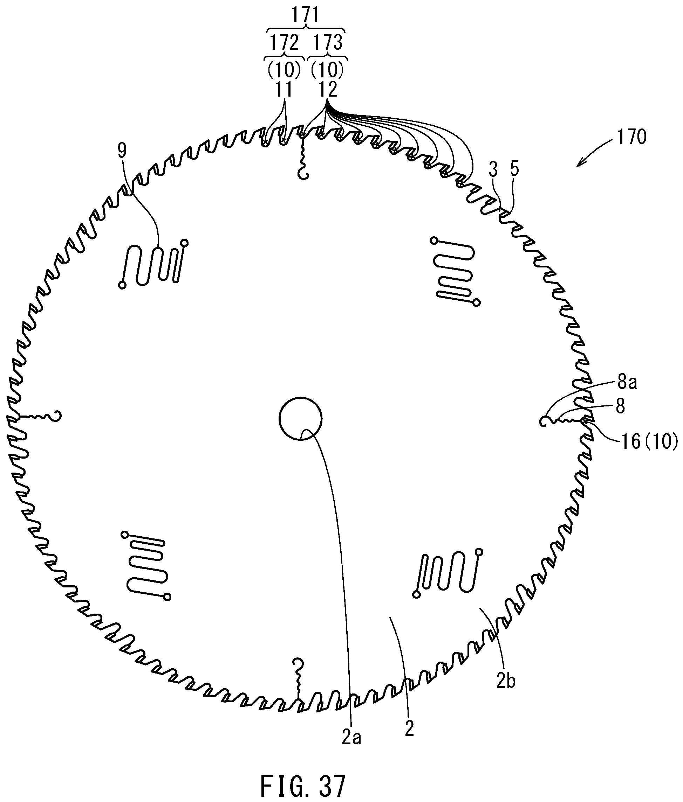

As shown in FIG. 37, the circular saw blade 170 of the fourth comparative example has a gullet row 171. In the gullet row 171, a deep region 172 and a shallow region 173 are alternately arranged in the circumferential direction. The deep region 172 is provided with 2 consecutive deep gullets 11. The shallow region 173 is provided with 10 consecutive shallow gullets 12. 8 sets of the gullet row 171 are repeated in the circumferential direction. The circular saw blade 170 has 4 shallow gullets 12 as slotted gullets 16. The slotted gullet 16 is adjacent to the front of the deep region 172 in the rotational direction.

With reference to FIG. 37, in the circular saw blade 170, when the gullet depth 11a of the deep gullet 11 (see FIG. 4) is 1.3 times, 1.5 times, and 2.0 times the gullet depth 12a of the shallow gullet 12 (see FIG. 4), the gullet depth 11a of the deep gullet 11 may be 1.24 times, 1.38 times, and 1.71 times the average gullet depth, respectively, and the gullet depth 12a of the shallow gullet 12 may be 0.95 times, 0.92 times, and 0.86 times the average gullet depth, respectively. Also, the tip depth 16a of the slotted gullet 16 (see FIG. 4), when regarded as a gullet depth, may be 2.89 times, 2.80 times, and 2.62 times the average gullet depth including slots, respectively.

The circular saw blade of the fifth comparative example, not shown in the figures, is provided with gullets 10 all having the same gullet depth 12a in the same manner as the circular saw blade 130 shown in FIG. 16. It differs from the circular saw blade 130 in that the number of gullets 10 is 96 and it has 4 slotted gullets 16. When the tip depth 16a of the slotted gullet 16 is regarded as a gullet depth, the gullet depth of the gullets 10 other than the slotted gullet 16 is 0.91 times the average gullet depth including slots. The tip depth 16a of the slotted gullet 16, when regarded as a gullet depth, is 3.02 times the average gullet depth including slots.

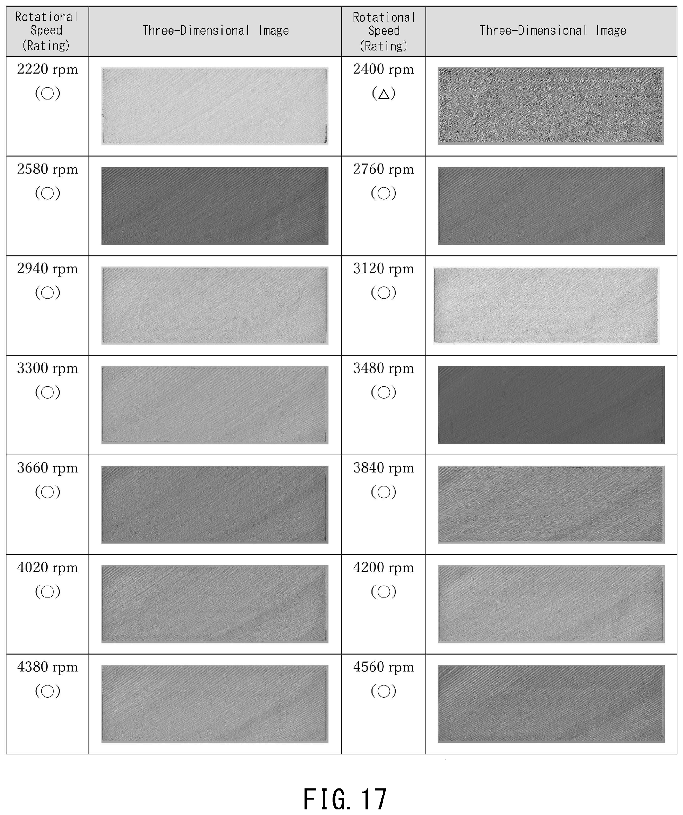

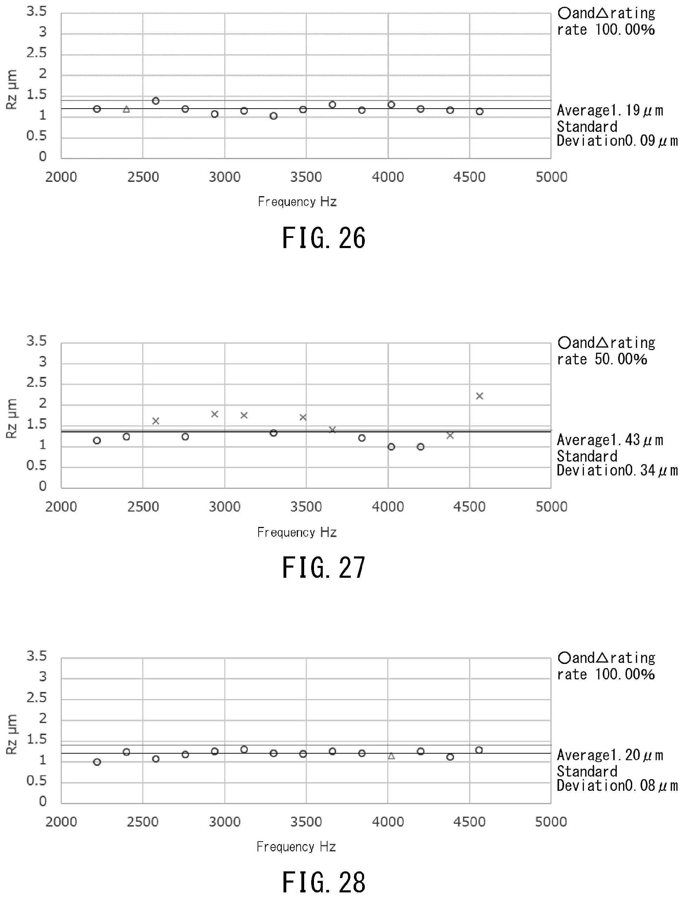

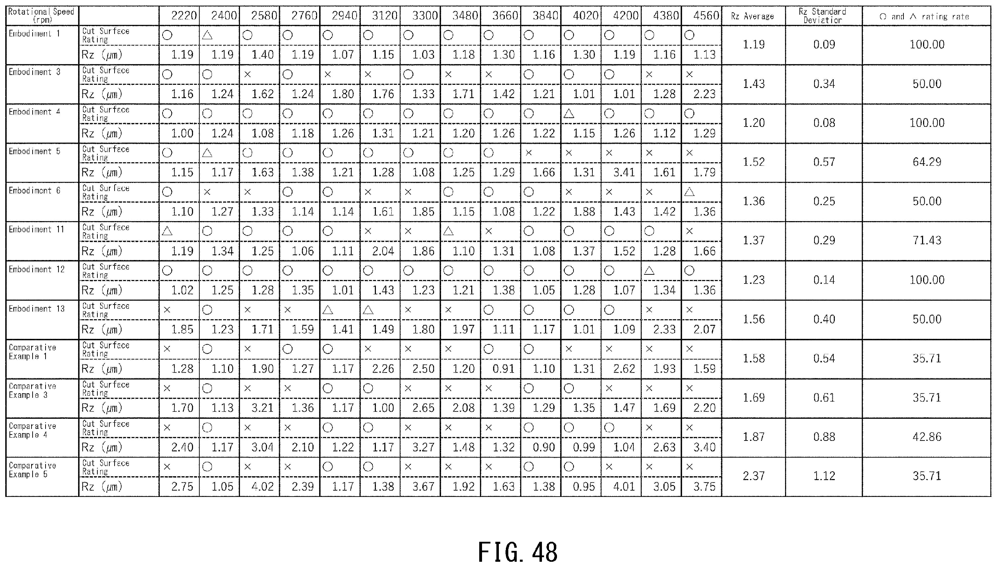

As shown in FIGS. 17, 26, and 48, the circular saw blade 1 of the first embodiment (see FIG. 4) produced a scale pattern on the cut surface in only one condition at 2400 rpm. Under other conditions, the cut surface received a ∘ rating (good rating). Even at 2400 rpm where a scale pattern occurred, the cut surface was relatively good, so it received a △ rating (relatively good rating). The surface roughness Rz was 1.5 µm or less at substantially all rotational speeds, with little variation. The surface roughness Rz was smaller than that of the circular saw blade 30 of the third embodiment (see FIG. 6) described later.

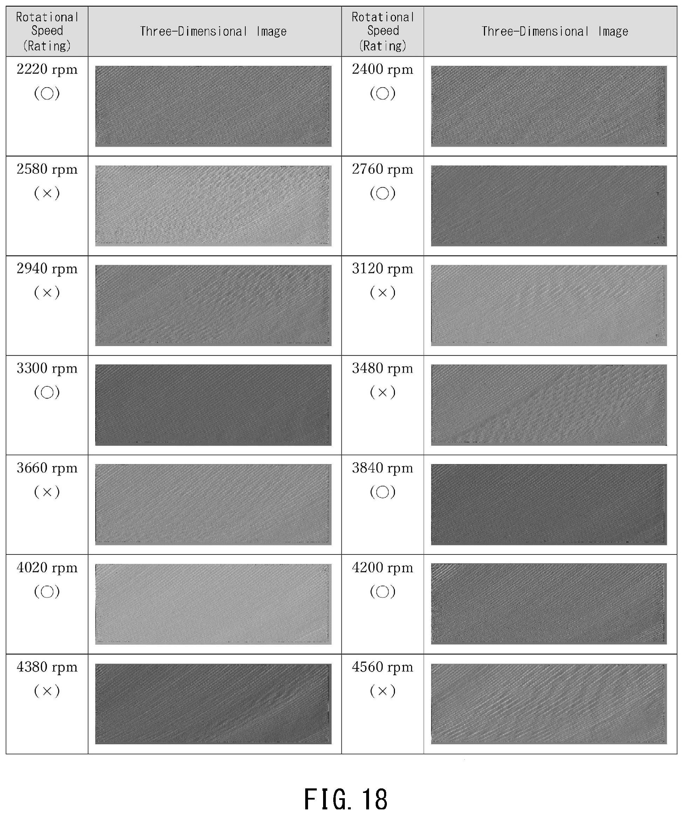

As shown in FIGS. 18, 27, and 48, the circular saw blade 30 of the third embodiment (see FIG. 6) yielded good cut surfaces under 7 conditions and received a × rating (NG rating) with a scale pattern formed on the cut surface under 7 conditions. The surface roughness Rz under the 7 conditions receiving a ∘ rating were all 1.5 µm or less. The surface roughness Rz under the 7 conditions receiving a × rating was substantially greater than 1.5 µm, but the difference from the ∘ rating was small, and there was little variation except at the high rotational speed condition of 4560 rpm. The surface roughness Rz was smaller than that of the circular saw blade 110 of the first comparative example (see FIG. 14) described later.

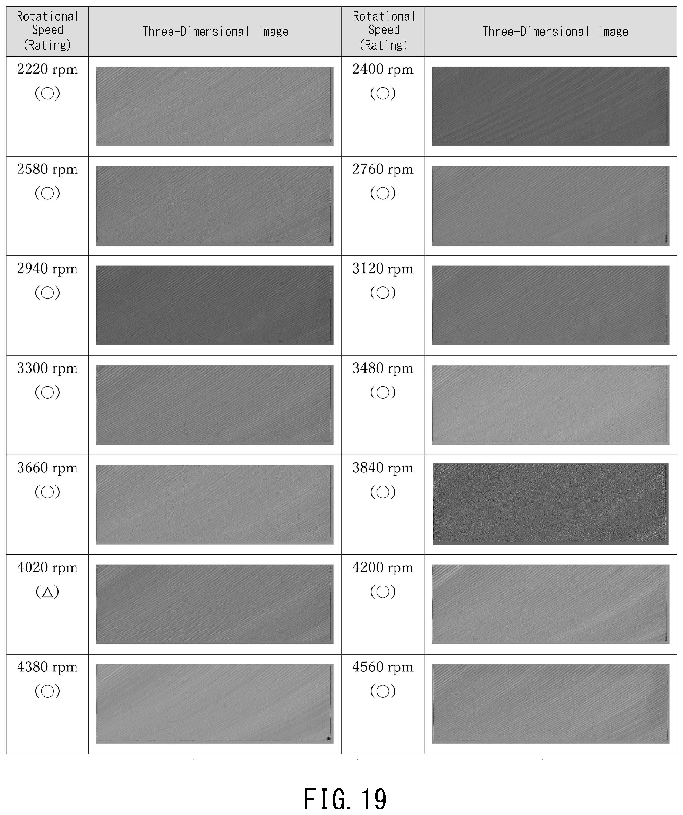

As shown in FIGS. 19, 28, and 48, the circular saw blade 40 of the fourth embodiment (see FIG. 7) produced a scale pattern on the cut surface in only one condition at 4020 rpm. Under other conditions, the cut surface received a ∘ rating. Even at 4020 rpm where a scale pattern occurred, the cut surface was relatively good, so it received a △ rating. The surface roughness Rz was 1.5 µm or less at all rotational speeds, with little variation.

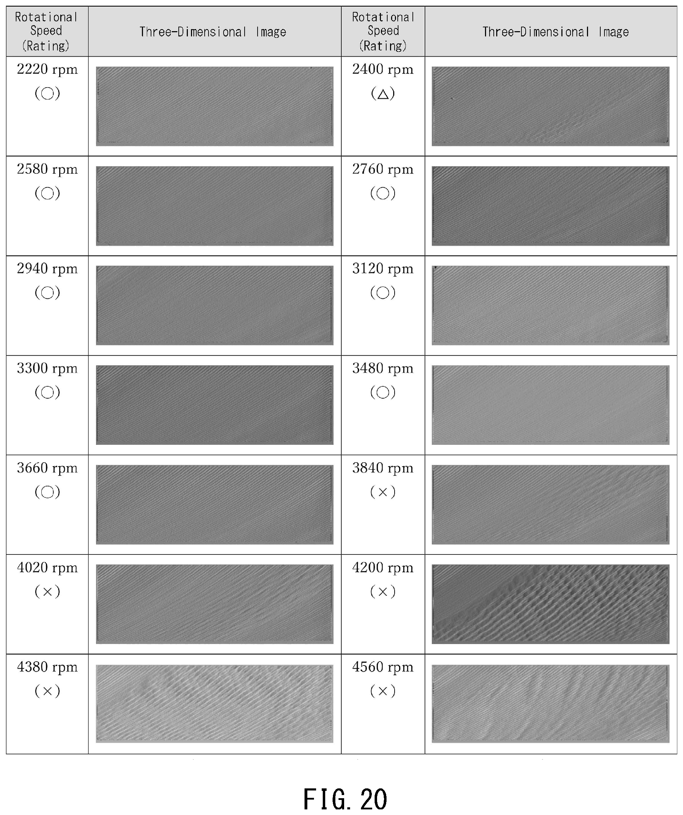

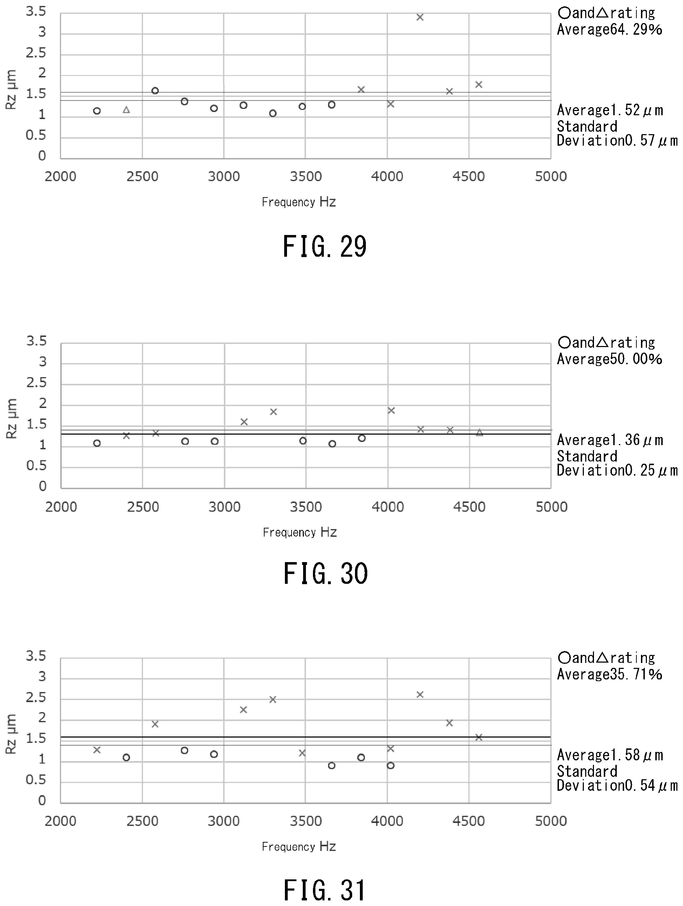

As shown in FIGS. 20, 29, and 48, the circular saw blade 50 of the fifth embodiment (see FIG. 8) yielded good cut surfaces under 8 conditions, received a △ rating with a scale pattern barely visible on the cut surface under 1 condition, and received a × rating with a scale pattern on the cut surface under 5 conditions. All conditions at 3840 rpm and above received a × rating. The surface roughness Rz under the 9 conditions receiving a ∘ rating or △ rating was substantially around 1.5 µm, with little variation. The surface roughness Rz under the 5 conditions receiving a × rating was substantially greater than 1.5 µm, and under the 4200 rpm condition, the surface roughness Rz was more than twice 1.5 µm. The scale pattern on the cut surface under the 4200 rpm condition was so prominent that it could be easily recognized visually.

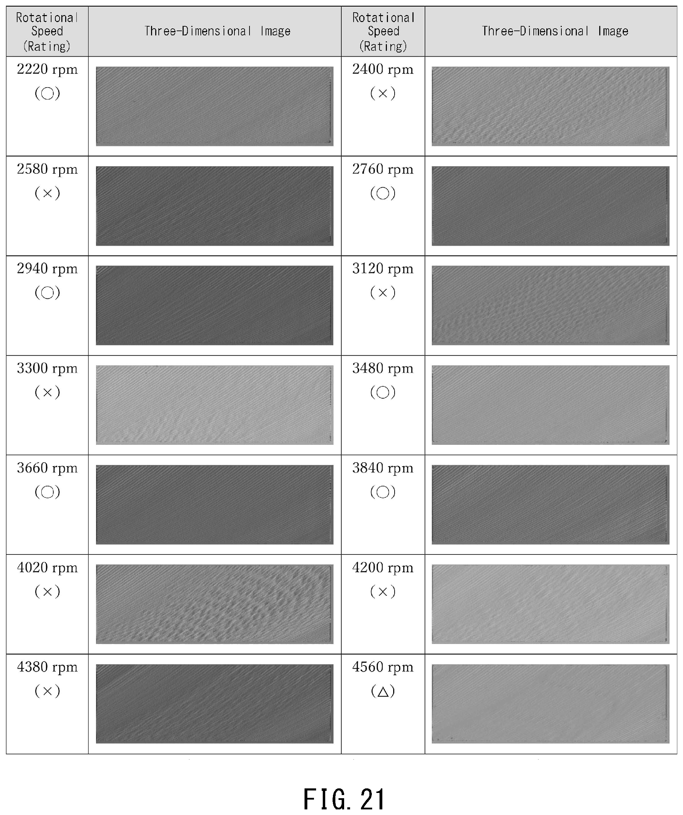

As shown in FIGS. 21, 30, and 48, the circular saw blade 60 of the sixth embodiment (see FIG. 9) yielded good cut surfaces under 6 conditions, received a △ rating with a scale pattern barely visible on the cut surface under 1 condition, and received a × rating with a scale pattern on the cut surface under 7 conditions. ∘ ratings and × ratings appeared irregularly as the rotational speed increased. The surface roughness Rz under the 7 conditions receiving a ∘ rating or △ rating was less than 1.5 µm, with little variation. The surface roughness Rz under the 7 conditions receiving a × rating was substantially 1.5 µm or slightly greater than 1.5 µm, with relatively little variation.

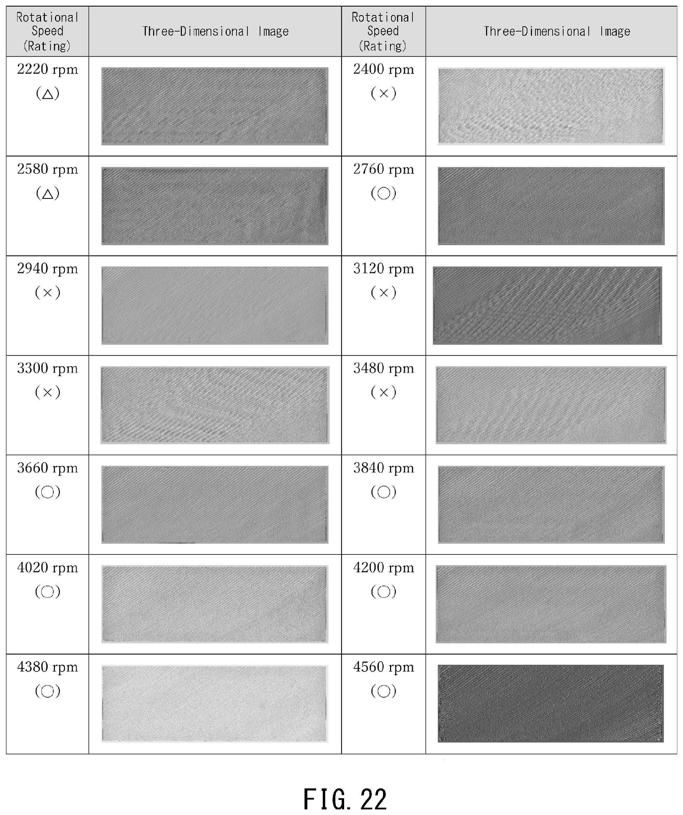

As shown in FIG. 22, the circular saw blade 100 of the tenth embodiment (see FIG. 13) yielded good cut surfaces under 7 conditions, received a △ rating with a scale pattern barely visible on the cut surface under 2 conditions, and received a × rating with a scale pattern on the cut surface under 5 conditions. × ratings and △ ratings were observed at rotational speeds of 3480 rpm and below, while all conditions at 3660 rpm and above received a ∘ rating. The only difference from the circular saw blade 1 (see FIG. 4) was the position of the shallow gullet 12 where the slot 8 is provided, but there was a visually recognizable difference in the condition of the cut surface of the workpiece compared to FIG. 17.

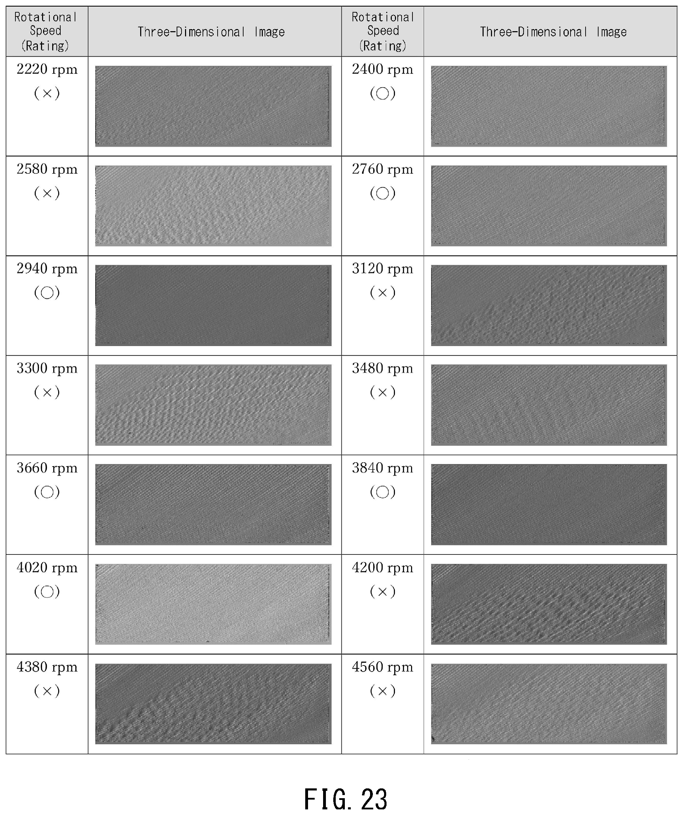

As shown in FIGS. 23, 31, and 48, the circular saw blade 110 of the first comparative example (see FIG. 14) yielded good cut surfaces under 6 conditions and received a × rating with a scale pattern on the cut surface under 8 conditions. ∘ ratings and × ratings appeared irregularly as the rotational speed increased. The surface roughness Rz under the 6 conditions receiving a ∘ rating was less than 1.5 µm, with little variation. The surface roughness Rz under the 8 conditions receiving a × rating was substantially 1.5 µm or greater than 1.5 µm, with relatively large variation.

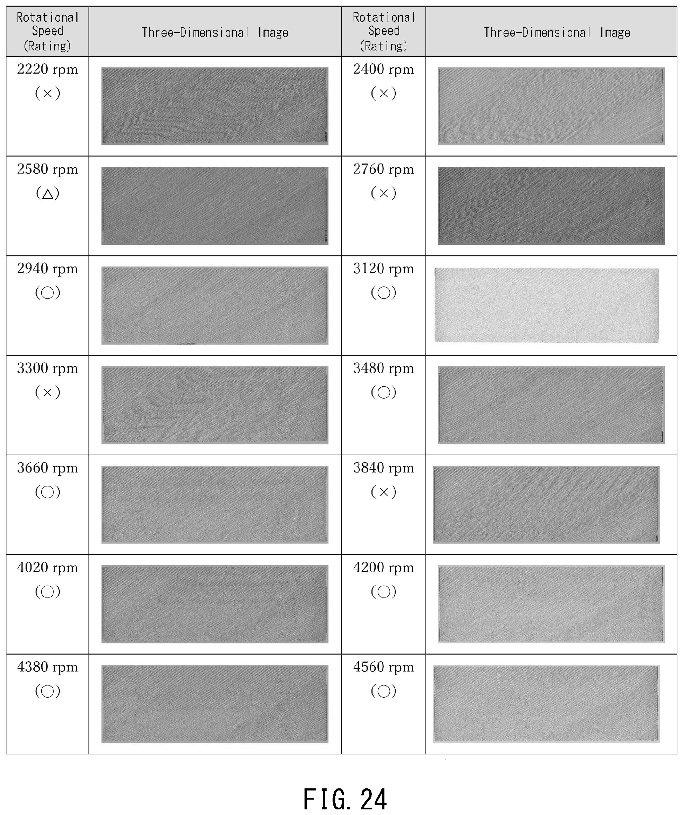

As shown in FIG. 24, the circular saw blade 120 of the second comparative example (see FIG. 15) yielded good cut surfaces under 8 conditions, received a △ rating with a scale pattern barely visible on the cut surface under 1 condition, and received a × rating with a scale pattern on the cut surface under 5 conditions. A scale pattern was particularly prominent on the cut surface of the workpiece at relatively low rotational speeds of 2760 rpm and below.

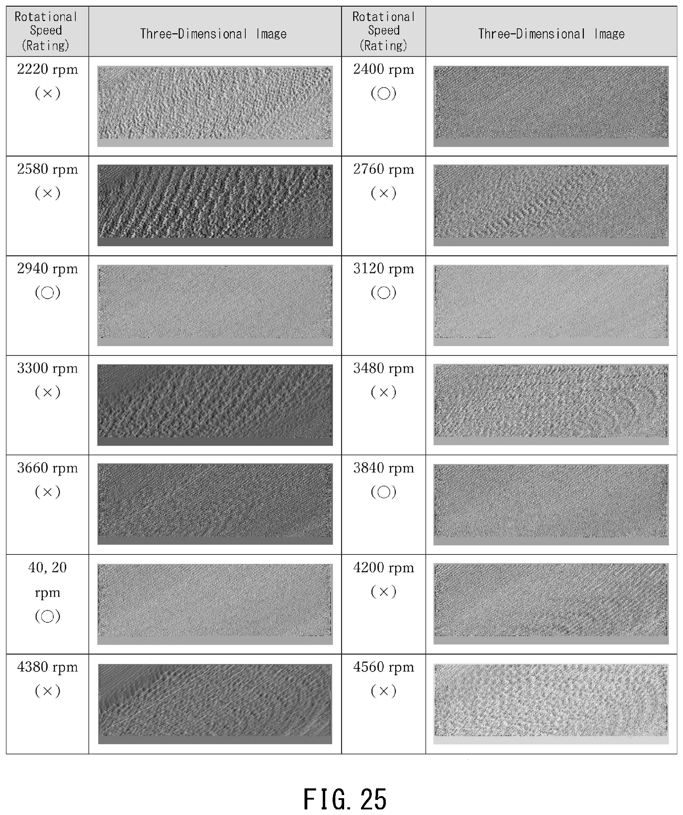

As shown in FIGS. 25, 32, and 48, the circular saw blade 130 of the third comparative example (see FIG. 16) yielded good cut surfaces under 5 conditions and received a × rating with a scale pattern on the cut surface under 9 conditions. ∘ ratings and × ratings appeared irregularly as the rotational speed increased. The surface roughness Rz under the 5 conditions receiving a ∘ rating was less than 1.5 µm, with little variation. The surface roughness Rz under the 9 conditions receiving a × rating was substantially 1.5 µm or greater than 1.5 µm, with large variation. The scale pattern occurring on the cut surface of the workpiece was so prominent that it could be easily recognized visually.

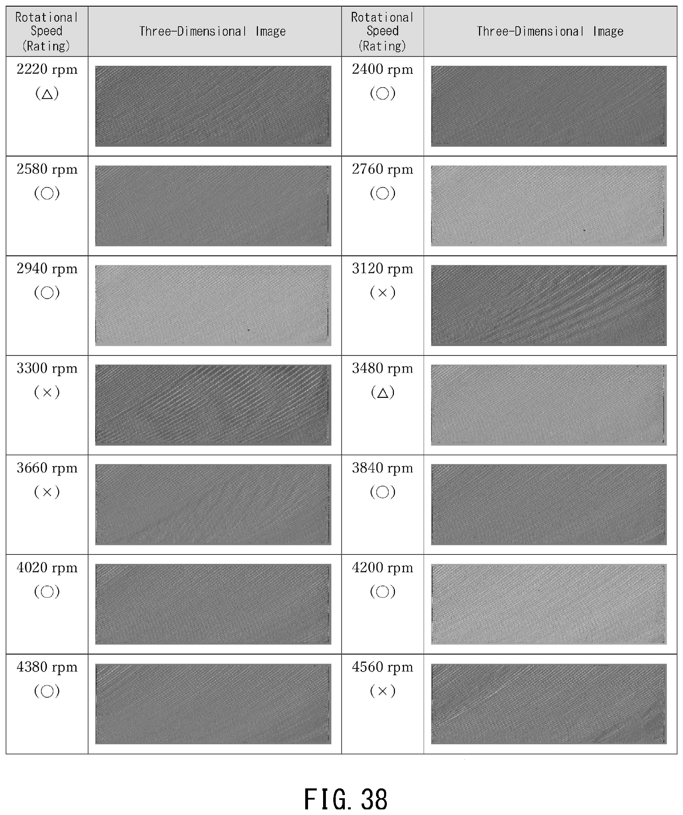

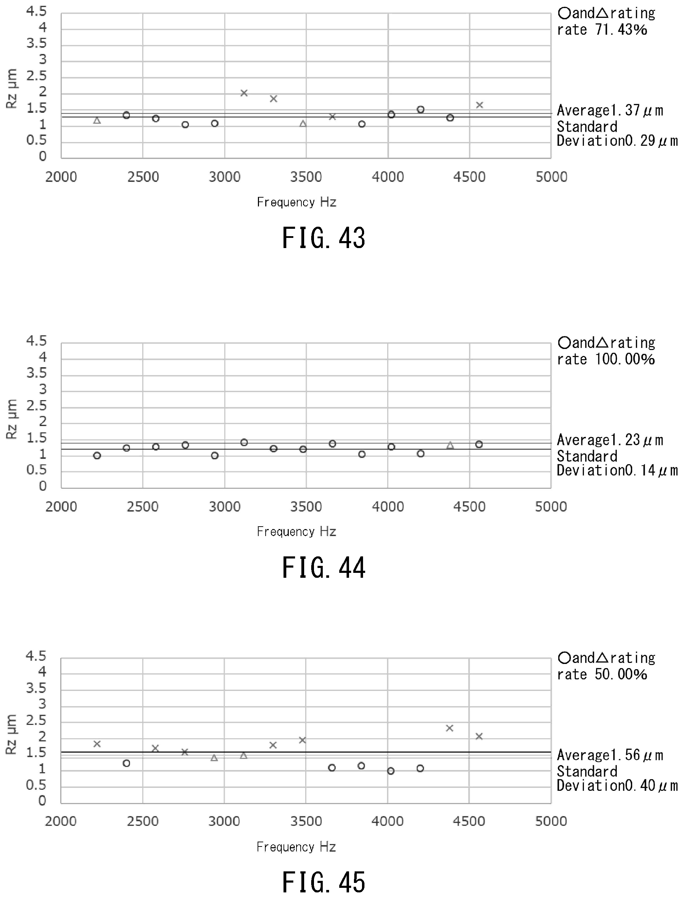

As shown in FIGS. 38, 43, and 48, the circular saw blade 140 of the eleventh embodiment (see FIG. 34) yielded good cut surfaces under 8 conditions, received a △ rating with a scale pattern barely visible on the cut surface under 2 conditions, and received a × rating with a scale pattern on the cut surface under 4 conditions. ∘ ratings and × ratings including △ ratings appeared irregularly as the rotational speed increased. The surface roughness Rz under the 8 conditions receiving a ∘ rating was substantially around 1.5 µm, with little variation. The surface roughness Rz under the 6 conditions receiving a × rating or △ rating was substantially 1.5 µm or slightly greater than 1.5 µm, with relatively little variation.

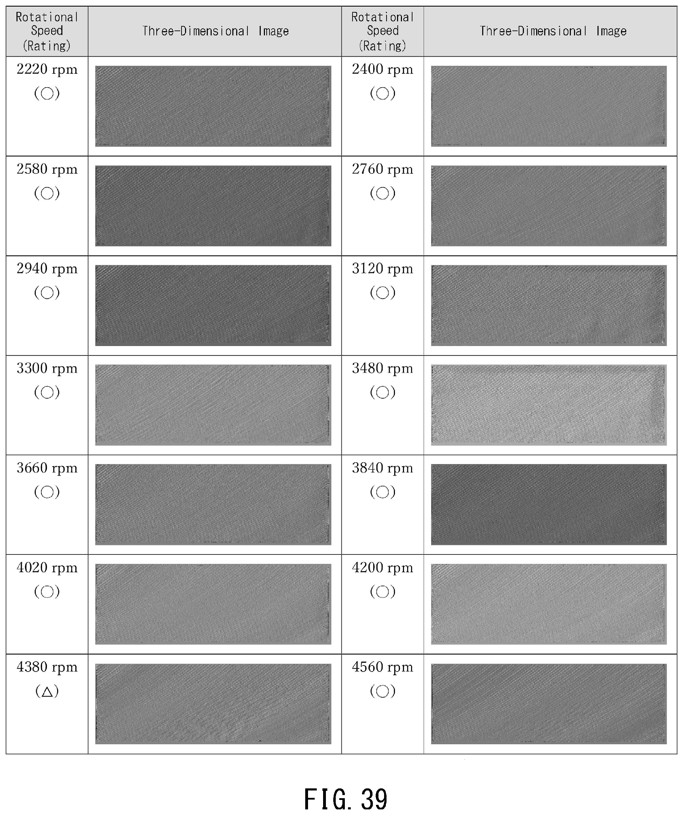

As shown in FIGS. 39, 44, and 48, the circular saw blade 150 of the twelfth embodiment (see FIG. 35) yielded a scale pattern on the cut surface under only one condition at 4380 rpm. Under all other conditions, the cut surfaces were good, receiving a ∘ rating. Even under the condition at 4380 rpm where a scale pattern appeared, the cut surface was relatively good, and therefore received a △ rating. The surface roughness Rz was substantially 1.5 µm or less, or slightly less than 1.5 µm, with little variation.

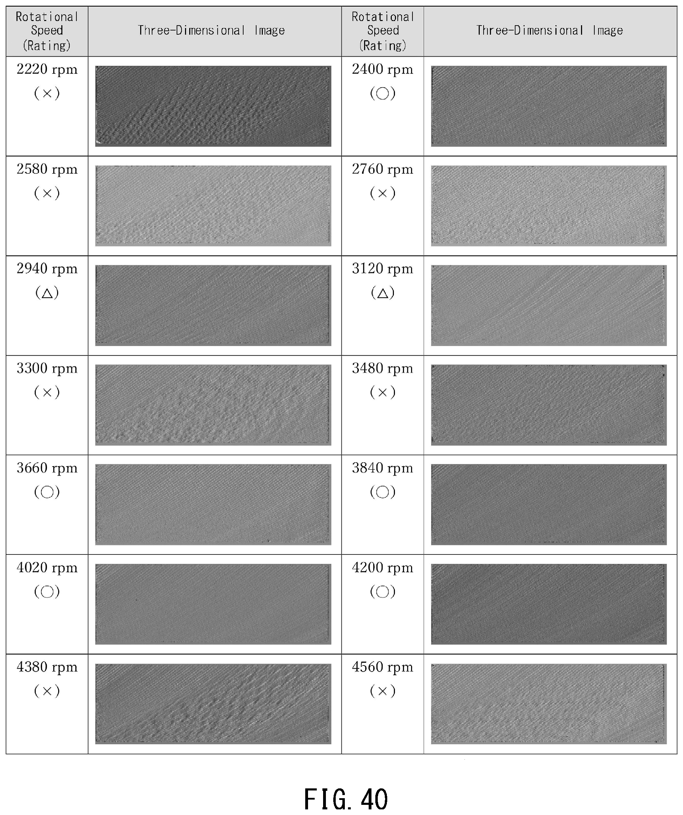

As shown in FIGS. 40, 45, and 48, the circular saw blade 160 of the thirteenth embodiment (see FIG. 36) yielded good cut surfaces under 5 conditions, received a △ rating with a scale pattern barely visible on the cut surface under 2 conditions, and received a × rating with a scale pattern on the cut surface under 7 conditions. ∘ ratings and × ratings including △ ratings appeared irregularly as the rotational speed increased. The surface roughness Rz under the 5 conditions receiving a ∘ rating was less than 1.5 µm, with little variation. The surface roughness Rz under the 2 conditions receiving a △ rating was substantially 1.5 µm, with little variation. The surface roughness Rz under the 7 conditions receiving a × rating was substantially greater than 1.5 µm, with relatively little variation.

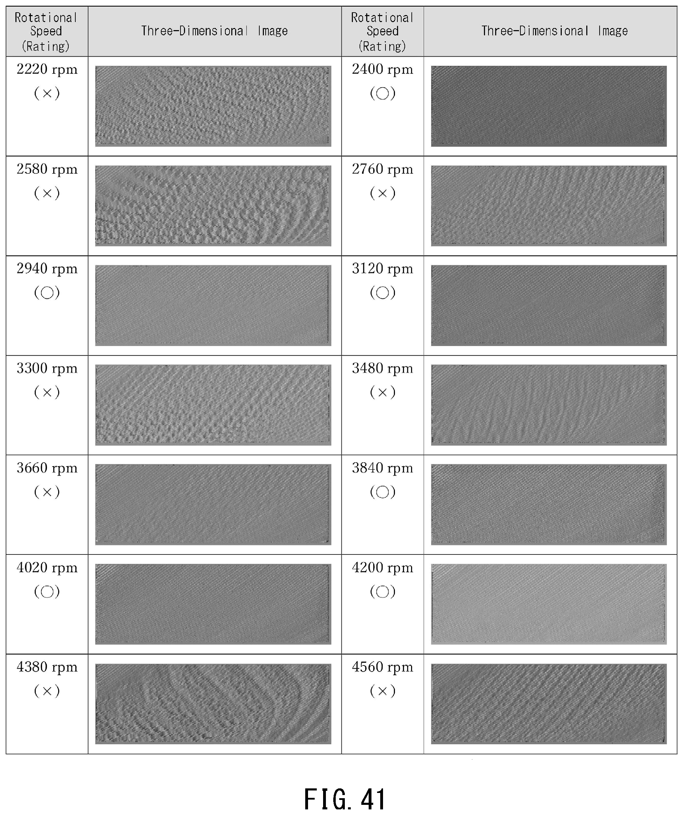

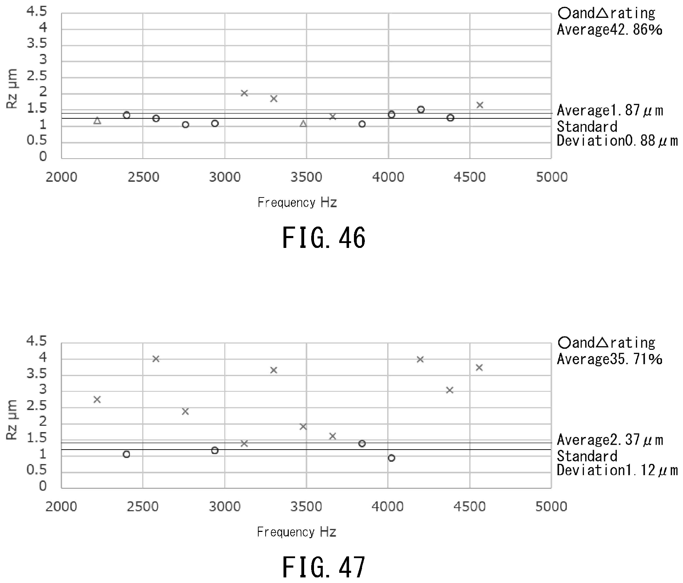

As shown in FIGS. 41, 46, and 48, the circular saw blade 170 of the fourth comparative example (see FIG. 37) yielded good cut surfaces under 6 conditions and received a × rating with a scale pattern on the cut surface under 8 conditions. ∘ ratings and × ratings appeared irregularly as the rotational speed increased. The surface roughness Rz under the 6 conditions receiving a ∘ rating was less than 1.5 µm, with little variation. The surface roughness Rz under the 8 conditions receiving a × rating was substantially 1.5 µm or greater than 1.5 µm, with large variation. The scale pattern occurring on the cut surface of the workpiece was so prominent that it could be easily recognized visually.

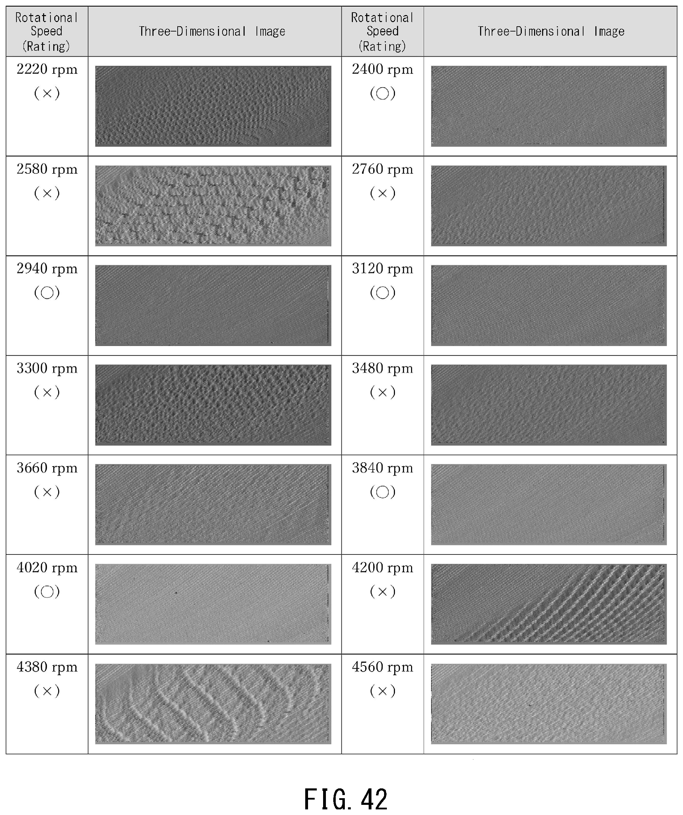

As shown in FIGS. 42, 47, and 48, the circular saw blade of the fifth comparative example yielded good cut surfaces under 5 conditions and received a × rating with a scale pattern on the cut surface under 9 conditions. ∘ ratings and × ratings appeared irregularly as the rotational speed increased. The surface roughness Rz under the 5 conditions receiving a ∘ rating was substantially 1.5 µm or less than 1.5 µm, with little variation. The surface roughness Rz under the 9 conditions receiving a × rating was substantially 1.5 µm or greater than 1.5 µm, with large variation. The scale pattern occurring on the cut surface of the workpiece was so prominent that it could be easily recognized visually. The surface roughness Rz was larger than that of the circular saw blade 170 of the fourth comparative example (see FIG. 37).

Based on the above test results, in the present disclosure, the gullet depth of the deep gullets was set to 1.13 to 1.60 times the average gullet depth. The gullet depth of the shallow gullets was set to 0.60 to 0.95 times the average gullet depth. The deep region was defined as containing only 2 to 3 consecutive deep gullets. The shallow region was defined as containing only 2 to 7 consecutive shallow gullets.

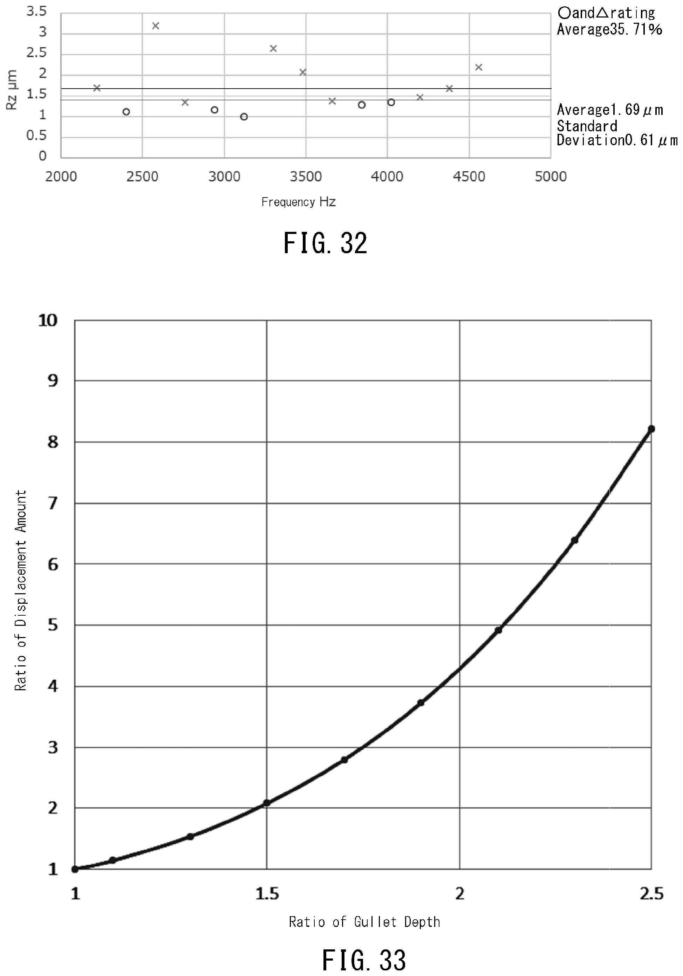

As shown in FIG. 33, a simulation was conducted on the displacement amount of one tooth body 3 when an axial load is applied to the base metal 2 (see FIG. 4). Simulations were conducted for the tooth body 3 placed between 2 deep gullets 11 and the tooth body 3 placed between 2 shallow gullets 12. A graph was plotted showing the ratio of the gullet depth 11a of the deep gullet 11 to the gullet depth 12a of the shallow gullet 12, and the ratio of the displacement amounts of the respective tooth bodies 3. As the ratio of gullet depths increased, the ratio of displacement amounts also increased. Moreover, as the ratio of gullet depths increased, the increase in the ratio of displacement amounts also increased. For example, when the ratio of gullet depths increased from 1.5 times to 2.0 times, the ratio of displacement amounts increased by approximately two times. For example, when the ratio of gullet depths increased from 2.0 times to 2.5 times, the ratio of displacement amounts increased by approximately two times. Therefore, in order to prevent the ratio of displacement amounts from becoming too large, the ratio of gullet depths in the present disclosure was set to 1.3 to 2.0 times.

Various modifications may be made to the circular saw blades of each embodiment described above. The number of gullets shall not be limited to the examples given and may be changed as appropriate. The number of deep gullets provided consecutively in the deep region may be either 2 or 3. The number of shallow gullets provided consecutively in the shallow region may be changed as appropriate within the range of 2 to 7. A configuration was described as an example in which a gullet row including a deep region and a shallow region is periodically repeated. Alternatively, for example, a configuration in which the gullet row is not repeated around the entire circumference of the base plate may be employed. For example, a configuration in which a plurality of types of gullet rows is arranged non-periodically may also be employed.

The deep region may be provided with deep gullets having two or more types of gullet depths. The shallow region may be provided with shallow gullets having two or more types of gullet depths. The base metal 2 may be provided with a plurality of types of slots, such as slot 8 and slot 72, each provided at the gullet bottom of a gullet. As described above, the slot may be provided in the shallow gullet 12, or the slot may be provided in the deep gullet 11.

The shape and size of the slot shall not be limited to those described as an example and may be changed as appropriate. For example, the slot may be formed only with a portion extending linearly in the radial direction. For example, the slot may be formed only by a recess in an arc shape without having a portion extending linearly in the radial direction. For example, the tip depth of the slotted depth may be changed as appropriate within the range of 1.3 to 2.0 times, or greater than 1.3 times and no more than 8.0 times, the average gullet depth including slots.

The shape of the gullets shall not be limited to those described as an example and may be changed as appropriate within the range satisfying the conditions of deep gullets and shallow gullets. For example, the width of the slot 92 of the circular saw blade 90 may be further widened to form a deep gullet bent in a substantially L-shape in cooperation with the gullet 91. The blade type is not particularly limited.

## Claims

1. A circular saw blade comprising:
a disk-shaped base metal;
a plurality of gullets recessed in an outer periphery of the base metal; and
a plurality of tips joined to the outer periphery of the base metal,
wherein the plurality of gullets includes deep gullets having a gullet depth of 1.13 to 1.60 times an average gullet depth and shallow gullets having a gullet depth of 0.60 to 0.95 times the average gullet depth, and
wherein the circular saw blade includes a deep region containing only 2 to 3 consecutive deep gullets and a shallow region containing only 2 to 7 consecutive shallow gullets.

2. The circular saw blade according to claim 1, wherein a slotted gullet in which a slot is connected to the gullet is adjacent to the deep region.

3. The circular saw blade according to claim 1 or 2, wherein the deep region and the shallow region are alternately arranged.

4. The circular saw blade according to claim 1 comprising:
a slotted gullet in which a slot is connected to the gullet in place of at least one of the deep gullets, and
wherein a difference between a radius of an axial-center-side end of the slot and a radius of an outermost periphery of a cutting edge is 1.3 to 2.0 times the average gullet depth.

5. A circular saw blade comprising:
a disk-shaped base metal;
a plurality of gullets recessed in an outer periphery of the base metal; and
a plurality of tips joined to the outer periphery of the base metal,
wherein the plurality of gullets includes slotted gullets in which slots extending radially inward from the gullets are connected, and unslotted gullets in which no slots are connected, and
wherein the circular saw blade includes a deep region containing only 2 to 3 consecutive slotted gullets and a shallow region containing only 2 to 7 consecutive unslotted gullets.

6. The circular saw blade according to claim 5, wherein a difference between a radius of an axial-center-side end of the slot and a radius of an outermost periphery of a cutting edge is 1.3 to 2.0 times an average of the gullet depths.

7. The circular saw blade according to claim 5 or 6, wherein the deep region and the shallow region are alternately arranged.
